# EUROPEAN PATENT APPLICATION

(11) **EP 4 383 166 A1**
(43) Date of publication of application: **12.06.2024**
(21) Application number: 23215455.9
(22) Date of filing: 11.12.2023
(51) Int. Cl.: G06Q 10/10, G06F 16/2457, G06F 40/30

(54) **OPERATING A COMPUTER TO ESTABLISH COMMUNICATION LINKS**

(30) Priority: 09.12.2022 EP 22212628
(71) Applicant: Boehringer Ingelheim International GmbH, 55216 Ingelheim am Rhein (DE)
(72) Inventor: SCHORPP, Michael, 55216 Ingelheim am Rhein (DE); GIANNAKOUROS, Maria, 55216 Ingelheim am Rhein (DE); KAPISODA, Aleksandar, 55216 Ingelheim am Rhein (DE)
(74) Representative: Zahn, Matthias

(57) **Abstract**

An intermediate computer (200) establishes a computer-implemented communication link (305) between a first computer (201) and a second computer (202). The intermediate computer (200) obtains (420) - from the first computer (201) - a person-identifier and a topic-descriptor (199, PLANET). It then executes (430) a query (391) to a set (300) of records (302, 303), wherein the records represent associations from particular topics to particular persons by comprising assignments from topic-descriptors to person-identifiers. Prior to obtaining (420) the person-identifier and the topic descriptor from the first computer (202), the intermediate computer (200) ranks (410) the records (302, 303) in the set (300), so that in executing (430) the query (391), the intermediate computer (200) processes higher ranked records (311) with priority over lower ranked records (312). After obtaining (420) the first person-identifier (Anna) and the first topic-descriptor (199, PLANET), the intermediate computer (200) selects the set of records by a selector (291), so that the step executing (430) the query (391) is performed with the selected set. With the second computer (202) being a computer that interacts with the further person (102), the intermediate computer (200) establishes (450) the communication link (305) between the first and second computers (201, 202).

## Description

### Technical Field

The disclosure generally relates to data processing by computers, and more particularly relates to establishing computer-implemented communication links between computers, by optimizing a set of records that the computer uses for a query to identify the computers at the ends of the links.

### Background

Within a pre-defined group of persons - such as for example within the members of an organization - a first person seeks to communicate with a second person. There is an overall goal for both persons to work together in the future (i.e., to collaborate).

Identifying the second person is a necessary condition for communicating; and communicating is a necessary condition for collaborating. In other words, enabling communication usually comes first, and collaboration usually comes second. The second person may deny communication and/or may deny collaboration.

Computers can assist the first person by providing searchable data. For example, data can be available in a directory that relates topics to persons (as in the yellow pages to name just one example). Computers can further enable the communication between persons (computer-assisted communication), by providing one or more communication links between the computers that are in use by the persons.

Computers use resources, for example, by searching in databases and by providing the communication links.

There are however challenges and constraints, such as the potential incorrectness or insufficiency of data, the potential non-availability of the communication link, and so on.

### Summary

In a traditional setting, the computer would obtain a topic-descriptor from the first person. The computer would then execute a query to a plurality (or set) of data records, and - in case of topic matching - it would identify the second person.

The first person would investigate constraints to communication (or opportunities for communication) from the beginning: the second person may not be available, potential collaboration might be inefficient, and so on. The computer can access data that supports such investigation. But such data is available from sources outside the set, and the computer would spend time to procure such data. For the user, such investigation would appear as waiting time, and that should be avoided. Further, the computer user may not have access to particular data, for example, because person-related data is restricted.

In a new approach, the computer ranks the records in the set before the computer obtains the topic-descriptor. By such ranking, the computer processes data regarding the ability to establish the communication link (ability data, first criteria) and - optionally - regarding the relevance of having the second person as the communication / collaboration partner. In other words, the computer thereby anticipates some of the investigations.

Although ranking requires the computer to spend computing resources, ranking may have advantages, among the following:
- Ranking does not change the records, the records remain the same, but ranking prioritizes the identification of records when the computer queries for them.
- Ranking does not necessarily expose restricted data to users, such as to the first person. Data that represents, for example, presence (or absence) of a person goes into the ranking in the form of probability values, but not as original data. The origin of such presence (or absence) information is not necessarily disclosed to users.
- During ranking, the computer does not have to interact with computer users. Waiting until ranking-completeness is therefore out of concern.
- Ranking does not prevent names to show up in the result. The computer may not identify a person with an initial query but would identify the person in a repetition query.

A computer-implemented method to establish a computer-implemented communication link between a first computer and a second computer is executed by an intermediate computer. In step obtaining, the intermediate computer obtains - from the first computer - a first person-identifier that represents a first person and a first topic-descriptor that is related to the first person. The intermediate computer performs a step executing a query to a set of records. The records represent associations from particular topics to particular persons by comprising assignments from topic-descriptors to person-identifiers. The query uses the first topic-descriptor, and a result of query execution comprises one or more person-identifiers, provided that - according to pre-defined matching rules - the first topic-descriptor matches a second topic-descriptor in at least one matching record of the set, so that the person-identifier in the at least one matching record represents at least a further person. Prior to obtaining the first person-identifier and the first topic-descriptor from the first computer, the intermediate computer performs ranking the records in the set, so that in the step executing the query, the intermediate computer processes higher-ranked records with priority over lower-ranked records. After obtaining the first person-identifier and the first topic-descriptor from the first computer, the intermediate computer performs selecting a particular set of records from a plurality of sets by a selector, so that the step executing the query is performed with a selected set. The intermediate computer performs establishing the communication link between the first computer and the second computer, provided that ability data indicate the ability of computer-assisted communication between the first person and the second person.

Optionally, the intermediate computer performs selecting the particular set according to a query mode that is determined by processing the query and context data according to one or more rules.

Optionally, to determine the query mode, the intermediate computer applies one or more rules that are pre-defined rules.

Optionally, to determine the query mode, the intermediate computer applies the one or more rules that are obtained from a machine-learning tool.

Optionally, the intermediate computer performs selecting the particular set by a query mode identifier that communicates a query mode to a selector, wherein the query mode identifier is implemented as a pre-trained machine-learning tool that has been trained by processing historical event data that comprises one or more of the following: event data with topic-descriptors and person-identifiers from the past; event data with queries and results from the past; event data with links that had been established in the past; and event data that describe follow up activities after communication links had been established in the past.

Optionally, during training the query mode identifier, the intermediate computer clusters the event data into at least two clusters, and the intermediate computer determines the query mode by matching the query to one of the clusters.

Optionally, obtaining the first person-identifier and the first topic-descriptor from the first computer further comprises to obtain a further descriptor, and wherein selecting the set from the plurality of sets comprises to process the first topic-descriptor and the further descriptor to identify an intention-to-topic mismatch, and wherein the intermediate computer selects the particular set according to presence or absence of the intention-to-topic mismatch.

Optionally, for the presence of an intention-to-topic mismatch, the intermediate computer determines the intention by processing the first topic-descriptor, the further descriptor and context data.

Optionally, the further descriptor is obtained, selected from the following: separating a text string into the first topic-descriptor and the further descriptor; parsing through data that the first person has entered into the first computer during a pre-defined time-interval in the past; and parsing through the data that are based on historical user interaction of the first person.

Optionally, the intermediate computer identifies presence or absence of the intention-to-topic mismatch by comparing the semantic distance between the first topic-descriptor and the further descriptor to a threshold value.

Optionally, in step ranking, the intermediate computer separates the set into at least two separations, wherein the separations each have at least a higher-ranked sub-set and a lower-ranked sub-set; and wherein in step executing the query, the intermediate computer initially accesses the records of the higher-ranked sub-set of the separation that corresponds to the operation mode.

Optionally, the intermediate computer repeats the step executing the query by accessing the lower-ranked sub-set if the initially performed query does not lead to the result.

A computer system is adapted to perform the computer-implemented method. In this case, the computer system comprises the intermediate computer.

A computer program product that - when loaded into a memory of a computer and executed by at least one processor of the computer causes the (intermediate) computer to perform the steps of the method.

### Brief Description of the Drawings

FIG. 1 illustrates an overview to computers and to persons and further illustrates an intra-computer communication link to be established;
FIG. 2 illustrates an entity-to-time diagram with the time progressing from left to right;
FIG. 3 illustrates ranking criteria, by showing a set of records, wherein the set is divided into a higher-ranked sub-set and a lower-ranked sub-set;
FIG. 4 illustrates the concept of query routing to differently ranked sets;
FIG. 5 illustrates a communication diagram that symbolizes persons and that - implicitly - symbolizes the ability of computers to communicate over the communication link;
FIG. 6 illustrates a state diagram to discuss ability data, for computers in use by persons symbolized in FIG. 5;
FIG. 7 illustrates a hierarchy diagram for persons and corresponding sub-sets, to discuss ability criteria and relevance criteria;
FIG. 8 illustrates attribute-to-person assignments in different states, so that the states can be used for ranking by relevance criteria;
FIG. 9 illustrates the computer determining relevance criteria in a probability-over-time diagram;
FIG. 10 illustrates two sets with records that represent topic-to-person associations and document-to-person associations;
FIG. 11 again illustrates the concept of query routing to differently ranked sets, also illustrates a query mode identifier as a further module;
FIG. 12 illustrates a flow-chart with further steps that can optionally be executed prior to the step querying;
FIG. 13 illustrates a topic-descriptor and further descriptors by way of example; and
FIG. 14 illustrates a generic computer.

### Detailed Description

### Entities and communication link

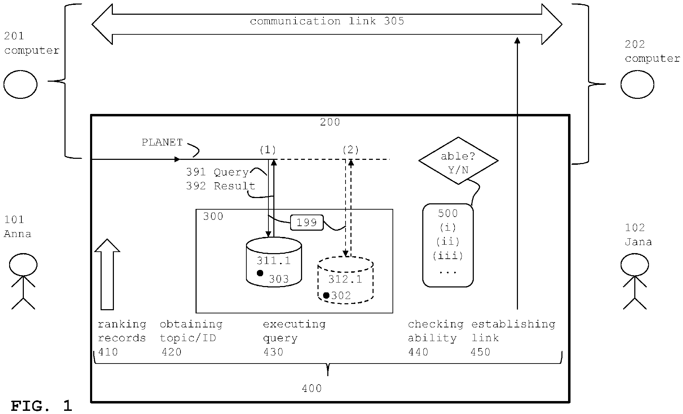

FIG. 1 illustrates an overview to entities that are persons 101, 102 (i.e., natural persons, wherein some of them may or may not communicate and/or collaborate with each other), first computer 201, second computer 202 (by circle symbols), and intermediate computer 200 (by a rectangle symbol, "computer 200" in short).

FIG. 1 further illustrates intra-computer communication link 305 to be established between computers 201 and 202. The term "communication link" is a synonym to the term "communication channel".

As used herein, while computer 200 performs computer-implemented method 400, computers 201 and 202 may interact with persons, i.e., with computer users. But computer 200 does not have to interact with computer users. The term "interact" will be used only for activities that occur during the execution of method 400. The term "user" is short for "computer user".

In executing method 400, computer 200 processes data that are related to topics and persons (such as the records in set 300), and that are related to computers 201 and 202 (such as ability data 500).

As an outcome of method execution, computer 200 establishes communication link 305 between computers (such as, in the example, between computers 201 and 202). There would be no link if communication is not possible.

Data flows between computers 201 and 202, as well as between computer 200 and computers 201 and 202 individually can be implemented by networks. As networks are well-known in the art, further details are omitted.

It is however not required that communication link 305 - once established - uses computer 200 as intermediate computer. In other words, computers 201 and 202 can communicate over link 305 directly.

Computer 200 can be regarded as a "server" because establishing communication link 305 can be regarded as a service (to computers 201 and 202 that would be "clients").

Establishing communication link 305 does not require computer 200 to identify a particular physical computer to be computer 202. It is sufficient to establish link 305 to any computer that is associated with a particular person (i.e., second person 102 using any computer).

Communication link 305 can be purpose-specific by letting the recipient (i.e., the user of computer 202) know that the link is established with the purpose to communicate regarding a particular topic.

Communication link 305 enables computer-assisted communication between persons via computers 201 and 202 in both directions (from computer 201 to computer 202, and vice versa, "computer-mediated" as synonym). More in detail, link 305 can enable communication in different forms, such as, for example: communication by email, by electronic messages (e.g., SMS, instant messages), by audio (e.g., by voice messages), or by video. In view of the OSI-model, the communication would be specific to the application layer. Link 305 is therefore a computer-implemented link.

### Interaction

While computer 200 performs the method, computer 201 interacts with a first user (consequently, computer 200 obtains data from computer 201), and computer 202 may interact with a second user.

In other words, individual computers (may) interact with individual users. For simplicity, the description refers to a scenario in that the first user is identical with first person 101, and the second user is identical with second person 102.

Such a person-to-user identity is however not mandatory, the first user can be a person who is not first person 101 but who acts for first person 101, and/or the second user can be a person who is not second person 102 but who acts for second person 102.

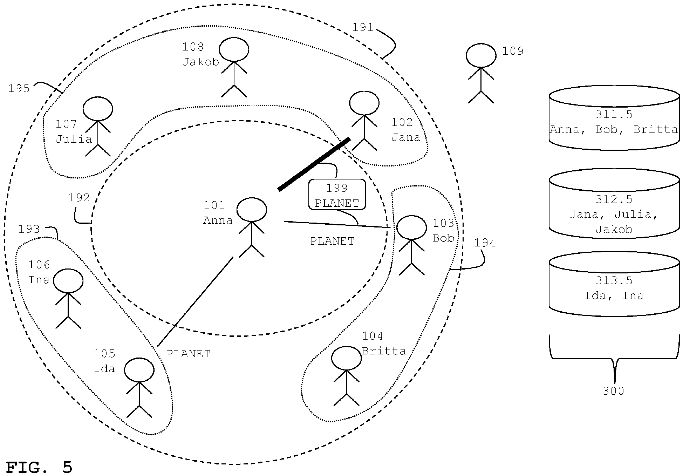

Other figures illustrate other persons (for example, persons 103-109 in FIG. 5), and other computers may interact with the other persons.

It is possible that the first user acts anonymously, without disclosing who the first person is.

### Communication between persons

The description now takes a short excurse to focus on the persons. No matter what FIG. 1 shows, persons communicate (and eventually collaborate) with each other because they may share a common topic. From a high-level perspective, topics (or "themes") are linguistic items that refer to human activities, such as for example sharing knowledge or sharing expertise in particular areas, and providing particular professional services.

In general, persons occasionally exchange information about topics, for example by talking to each other, by creating documents that are accessible to other persons (via computers for example), by working and thereby leaving traces (i.e., in the computers) that allow the identification of topics, or otherwise.

From that linguistic perspective, topics use heterogeneous expressions: For example, topics can comprise different words or phrases, and topics can be available in different natural languages. Somebody may announce in a conversation or in an electronic chat that he is familiar with the planets in the solar system. Somebody else may publish her curriculum to a computer directory that indicates a degree in astronomy and that is hyper-linked to a thesis regarding planets. Somebody else may be famous for always knowing where to find Venus, Mars, Jupiter at the sky.

Users can enter topics into computers (cf. computer 200, before it executes method 400, i.e., no interaction during method execution). In many cases, the users would enter the topics in form of short statements or keywords in human-understandable form. Some computers may parse through documents (such as the mentioned thesis) and identify topics (to create statements or keywords according to pre-defined rules). It is also feasible that users select (or de-select) topics from lists that have been created earlier.

Well-known computing techniques allow to harmonize topics, in other words to create expressions that are homogeneous. For example, a computer can harmonize a phrase "planets in the solar system" to "planetary astronomy" or simply to "PLANET". The computer could parse a document to find topics such as PLANET, STAR etc., the computer can access an ontology in that Venus, Mars, Jupiter etc. are categorized as PLANET.

The description uses uppercase letters for topic-descriptors (or "descriptors" in short), and PLANET will be the topic-descriptor for most of the examples.

It is also known - and the above-mentioned yellow pages just give an example - that topics can be associated (or related, or assigned) to persons, and that computers can store such associations. Persons have names, here much simplified by first names (e.g., "Anna"). In the computer that would be person-identifiers (i.e., data structures that represent particular persons).

### Matching descriptors and records

As used herein, two topic-descriptors match according to pre-defined rules: if both topic-descriptors are identical (basic rule), or if both topic-descriptors are similar (similarity rule)

To give a similarity rule by way of example, the topic-descriptor PLANET matches any topic-descriptor that is a sub-collection { } in the cardinality 3 or higher with descriptors from the similarity collection {MERCURY, VENUS, EARTH, MARS, JUPITER, SATURN, URANUS, NEPTUNE}. For example, PLANET matches {MERCURY, VENUS, EARTH}, PLANET matches {MERCURY, MARS, URANUS}, but PLANET does not match {SUN, MERCURY, VENUS}. Also, PLANET does not match {MERCURY, MARS} because the cardinality of the sub-collection is 2 (i.e., smaller 3).

A "record" is a data-structure that represents at least a single association from a particular topic to a particular person, by comprising a topic-descriptor (such as, for example, PLANET), a person-identifier (in this description simplified to the name of the person, such as "Anna") and an assignment from the topic-descriptor to the person-identifier (in the following given for example as "PLANET-to-Anna").

A "set" is a plurality of records, for example, the records PLANET-to-Anna, PLANET-to-Bob (record 303 in FIG. 1), PLANET-to-Jana (record 302 in FIG. 1), PLANET-to-Ida, SUN-to-Carmen, SUN-to-Britta, etc. would belong to such a set. The computer uses data-structures to relate records to the set. The description uses reference 300 for the set of records. (At its end, the description will refer to set 600 that comprises records with topic-to-document relations. Set 600 will be used in an optional embodiment.)

An "assignment action" is a computer-implemented activity to create, modify or delete a record. As records belong to set 300, assignment actions also comprise adding the created or modified record to set 300, and removing a deleted record from set 300). Assignment actions can involve computer 200 receiving assignment data from users (for example, Anna would select PLANET as a given keyword and the computer would create the corresponding record). Assignment actions can also be computer-only activities.

Assignment actions can occur at substantially any point in time, for simplicity, it is assumed that assignment actions occur prior to computer 200 executing method 400.

Assignment actions can - optionally - comprise processing metadata. Such metadata indicates circumstances, such as the creation and/or modification time points (by time-stamps or the like), the identification of users who enter topics or the like into computer 200 (and thereby repeat assignment actions, via computers 201, 202 or otherwise), the identification of documents that computer 200 has parsed, etc. Such metadata can be part of the data-structure of the record.

A "confirmation" is an activity to update an existing record, usually by adding further metadata to the record. Confirmations can involve assignment actions as repetitions, with the metadata indicating the circumstances likewise.

Set 300 (with records, cf. FIG. 1) can be implemented in a variety of technical implementations, such as in databases (with the records being, for example, entries in tables), files (with the records being, for example, lines in the file), documents, or data repositories. For simplicity, the description takes the terms "query" and "result" (from database technologies) but applies them to set 300 in any implementation. It is noted that not every query leads to a result.

It is convenient to store the records in formats that allow separating records (or differentiating records) with minimal computational efforts. For example, a computer file that keeps the four records PLANET-to-Anna, PLANET-to-Bob, PLANET-to-Jana, PLANET-to-Ida in separate lines can easily be separated (by separating the lines). Or, in a further example, a computer file with the single line "PLANET-to-Anna, PLANET-to-Bob, PLANET-to-Jana, PLANET-to-Ida" would comprise the four records as well, but separating requires some more computation. The reasons for this separation-focused optimization will become visible when the description explains the concept of "ranking" (cf. ranking distributes records into sub-sets).

### Positive for explanation only

The description explains assignment actions (and confirmations) and the records (and sets) in positive terms. The skilled person can add negations. For example, an assignment can be negative assignment (e.g., PLANET-not-to-Berta), a confirmation (in the above technical sense) can actually be a negative statement (in terms of content, the record "PLANET-to-Helena" would be changed to "PLANET-not-to-Helena"), a topic-descriptor can define exceptions, PLANET-to-Jana, but EARTH-not-to-Jana.

### Communication team

Computer 200 establishes communication link 305 between computers (e.g., between computers 201 and 202.). In view of persons 101, 102 being the users of computers 201, 202, computer 200 also identifies communication team 101/102 (cf. FIG. 1). Computer 200 does not have to tell persons 101/102 that they are members of team 101/102, but the fiction to have team 101/102 is convenient to explain the reasons why computer 200 establishes communication link 305 between particular computers (and not between other computers).

At least one record in set 300 matches to topic-descriptor 199 that computer 200 obtains (via computer 201 from person 102, e.g., PLANET). There are at least two points to take into account:

(a) The focus is on the descriptor, not on the topic. A record in set 300 does not have to correspond to reality. Nothing is perfect, and assuming that Helena writes a short story in that the protagonists called "Jupiter" and "Mars". In this much simplified example, the computer that collects the records may have created the record PLANET-to-Helena (for example, by simply parsing the story, without receiving assignments from Helena, and without receiving confirmations). The record may not correspond to reality, but Helena - the fiction writer - may be invited to join a communication team with astronomers. As it will be explained, ranking is an approach to make such situations less likely.

(b) The notation communication team 101/102 therefore stands for the persons behind computers 201 and 202 for that communication link 305 has been established. Person 101 (e.g., Anna) may use link 305 (e.g., to send a message), or may not. Person 102 (e.g., Jana) may answer (via link 305 or otherwise), or may not.

### Method overview

More in detail, in obtaining 420, computer 200 obtains a first person-identifier (Anna) that represents first person 101, and obtains a topic-descriptor (199, PLANET) that is related to first person 101. FIG. 1 symbolizes this step by the arrow drawn from computer 201 and labelled PLANET.

Computer 200 then processes two AND-related conditions: the topic condition, and the ability condition.

For the topic condition, computer 200 processes topic-descriptor 199 (e.g., PLANET) in querying 430 to retrieve result 392 (with a person-identifier, e.g., Bob, Jana). Retrieval is possible because there is a record with a topic-descriptor that matches topic-descriptor 199. In implementations, the query uses, for example, the topic-descriptor PLANET as part of a query statement, such as "find PLANET", to identify the records with PLANET in the result). The description is simplified here, queries may not lead to results so that processing may stop.

For the ability condition, computer 200 processes ability data 500 and thereby determines that it is possible to establish communication link 305 between first computer 201 and second computer 202. As result 392 (from querying 430) comprises a person-identifier, computer 200 thereby determines if second computer 202 (that is associated with the person-identifier) can be identified.

The determination is binary: (positive determination) link 305 can be established, or (negative determination) link 305 cannot be established.

Ability data 500 can be data such as the following. (i) Second computer 202 is registered to a person-identifier in a registry or the like. For simplicity, the description assumes that one computer is registered for one person. For example, individual computers can be assigned to individual persons, such as Bob and Jana (computer 201 would be assigned to Anna). (ii) Person-identifiers can be registered to computers. This is just the other direction: Jana would use computer 202 as her computer and she can be reached via computer 202. The person has a user account (for example to access computer 200 via a client device that would be computer 202).

Ability data 500 in aspects (i) and (ii) can be summarized that person-identifiers (e.g., Anna, Jana, Bob etc. in set 300) can be used to establish link 305. Second computer 202 does not have to be specified. Computer 200 does not have to identify a particular physical second computer. It is sufficient if the second person who uses computer 202 could be reached, via link 305. Alternatively, computer 200 could determine that second person 102 is associated with network address (or the like) by that computer.

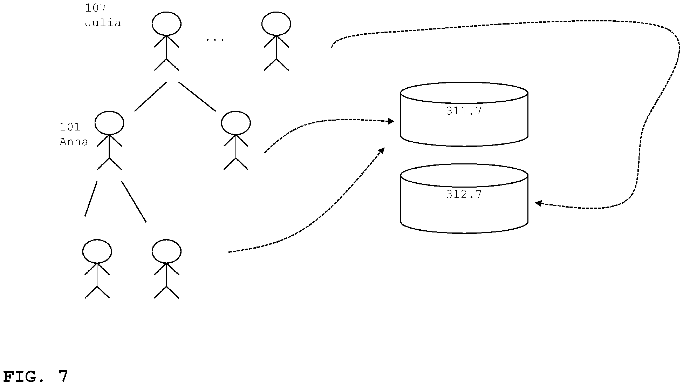

Further, ability data 500 can be used as follows: (iii) Second computer 202 is communicatively coupled to a network. It is assumed that first computer 201 is communicatively coupled to the network as well. (iv) Data shows the relation between persons (examples with FIGS. 5 and 7).

The skilled person can use further data, and can choose which data to apply. For simplicity, the description explains ability data 500 by positive examples, but negation is possible. For example, if there is no computer registered for a particular person (cf. person 109 in FIG. 5), establishing link 305 is not possible.

Looking at the timing, there are two options to determine communication ability: checking 440 (following querying 430 if result 392 becomes available), or otherwise in a below-explained ranking implementation.

In the example, computer 200 should have established communication link 305 because - simplified - person 101 has provided topic-descriptor 199 (e.g., PLANET) and computer 200 identifies record 302 that represents the association of PLANET to person 102 (topic condition) and because communication ability has been determined.

### Method details

FIG. 1 illustrates method 400 symbolically:
- ranking 410: computer 200 ranks the records within set 300,
- obtaining 420: computer 200 obtains a first person identifier (e.g., "Anna") and obtains first topic-descriptor 199 (e.g., PLANET),
- querying 430: computer executes query 391 to set 300 (and eventually retrieves result 392 from set 300), in an initial cycle 391(1)/392(1) and - if needed - also in one or more repetition cycles 391(2)/392 (2),
- checking 440, being an optional step: computer 200 checks the ability of computers 201 and 202 to communicate, with binary outcomes: 440 (positive, ability confirmed) or 440 (negative, ability denied);
- establishing 450: computer 200 establishes communication link 305 (symbolized by an arrow pointing to link 305).

Computer 200 executes steps 410, 420, 430, 440 (optional) and 450 substantially in the order as illustrated in FIG. 1 from left to right.

As illustrated in FIG. 1, set 300 comprises records, for example, records 302 PLANET-to-Jana, and record 303 PLANET-to-Bob. FIG. 1 illustrates the records by dots.

Set 300 has been created and updated by assignment actions (as explained above). To stay with the typical scenario, Anna had previously indicated to be familiar with PLANET. Such actions can not be scheduled (at least not by computer 200). Computer-only assignment actions can be scheduled to be performed periodically. In both cases, set 300 is available before computer 200 executes method 400. Creating set 300 can be regarded as providing knowledge profiles (here by topic-descriptors) for individual persons.

For ability data 500, the situation is different, for a number of reasons: There is no dedicated database or similar source available. Running a database query or the like is not feasible. (FIG. 1 shows ability data 500 only symbolically). Persons may not act as computer users to update ability data 500, and occasionally, persons can not act at all.

In view of the changes, ability data 500 has two aspects: Quasi-static ability data changes in relatively long time-intervals (measured in weeks, months, years), and dynamic ability data changes in relatively short time-intervals (measured in days or hours).

The description just differentiates quasi-static and dynamic change patterns for convenience of illustration, the exact duration of the interval does not matter.

As both the topic condition and the ability condition are AND-related, the data can be processed in any order. In other words, determining ability can be a pre-query determination (to be explained below in connection with ranking as a special ranking feature), conveniently applied to quasi-static ability data, and a post-query determination (e.g., optional checking 440), conveniently applied to dynamic ability data.

Implementations can be "pre-query only", "post-query only" (cf. checking 440) and "both pre- and post-query".

### Ranking

The description has already mentioned ranking 410. From a high level perspective, ranking 410 allows computer 200 to process data for the topic condition (and optionally for the ability condition) in a manner that saves computing resources. In some sense, ranking looks into the future. To explain that, the description opens its perspective and looks from the past to the future.

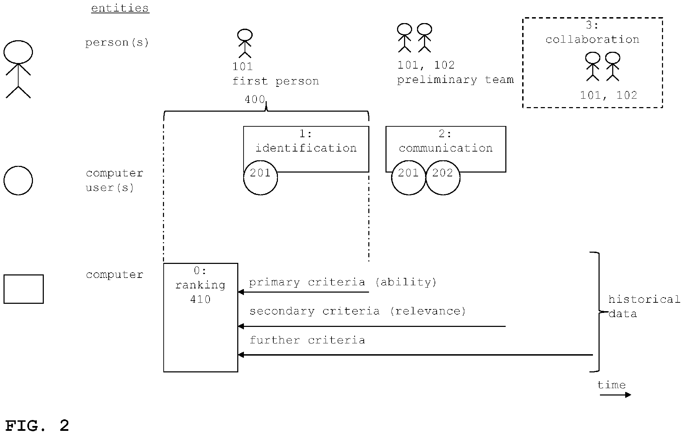

FIG. 2 illustrates an entity-to-time diagram with the time progressing from left to right. The figure is a matrix with the entities in rows (i.e., persons, users, computer) and activities in columns within phases from 0 to 3 (i.e., phases that are dominated by the computer performing method steps and phases with activities involving persons).

During identification phase 1 (mostly corresponding to computer 200, with method steps obtaining 420 obtaining and querying 430, cf. FIG. 1), at least one person - first person 101 - acts as the user for computer 201. Simplified, computer 200 queries set 300 and identifies at least a person-identifier (i.e., for second person 102). Phase 1 ends with method step establishing 450 link 305. From the perspective of persons, phase 1 results in the identification of communication team 101/102 (communication link 305 between computers 201/202, and persons 101/102 and computers 201/202 are registered).

During communication phase 2, persons 101 and 102 (of communication team 101/102) can communicate with each other (initially at least via link 305). For example, both persons 101 and 102 communicate by using computers 201 and 202, respectively. Communication in phase 2 can be regarded as computer-assisted communication (or as "computer-mediated communication" in the same meaning). Communication phase 2 is not part of method 400, and this communication may end with a (mental) decision of persons 101 and 102 to collaborate or not. In other words, communication team 101/102 may turn to a collaboration team 101/102, or not.

During collaboration phase 3, the persons in collaboration team 101/102 would collaborate. Or, there could be no cooperation at all. The figure symbolizes such ambiguity by drawing a box with dashed lines. Persons 101 and 102 may use a computer or not, it does not matter. The time point for the transition between phases 2 and 3 does not have to be defined exactly (because method execution has ended already). Collaboration implies that communication continues.

Again, looking at the computers, they use computing resources, such as processing resources (for example the CPU), memory and storage resources, time to process data (such as time to query the set), and network resources to exchange data (between physically different computers in a computer system that is summarized, for example, as computer 200).

Computer 200 (in phase 1, and computer 201 to some extent) and computers 201/202 in phase 2 use such resources. Some resource spending is even visible for users. To give one example per phase only: in phase 1, person 101 would have to wait until computer 200 has completed establishing 450 (implicitly, identified communication team 101/102); and in phase 2, users 201 and 202 would exchange messages or the like via computers (cf. the above examples for communication via link 305).

To reduce resource spending (at least for computer 200), method 400 also comprises above-introduced ranking 410 (cf. ranking phase 0). As ranking phase 0 does not require interaction with users, FIG. 2 shows the column for phase 0 without them. From an overall perspective, computer 200 thereby pre-processes records (for example records, 302 and 303 within set 300) to differentiate records into higher-ranked records and lower-ranked records, according to ranking criteria.

Ranking criteria are represented by data. In other words, and from a different perspective: ranking criteria influence the modality by that computer 200 accesses the records in set 300.

Differentiating records into higher-ranked and lower-ranked records has the consequence that computer 200 in querying 430 applies a priority in time. This priority in time can be differentiated into two categories, here labelled as "query priority" and "result priority":

The query priority is related to the timing for executing the query. Computer 200 executes the query by initially accessing the records in higher-ranked sub-set 311.1 (i.e., before accessing the records in lower-ranked sub-set 312.2).

The result priority is related to the timing by that computer 200 processes result 392. Performing the subsequent steps, such as (optionally) checking 440 and establishing 450 can be prioritized in some aspects. Result 392 can comprise an indication to control the execution of establishing 450 (optionally of checking 440). For example, and with details to be explained, the indication instructs the computer to perform checking 400 for a particular person first (e.g., check for Bob first, for Jana second).

Regarding the query priority, there is a consequence that computer 200 speeds up the query. Simplified, and to give only one reason: the number of ranked records is smaller than the number of all records (in set 300). In other words, the higher-ranked sub-set and the lower-ranked sub-set each individually have less records than set 300 as a whole.

Regarding the result priority, the description gives explanations below.

As the data (that represent the ranking criteria) have relations to the different phases (that follow the ranking step), it is convenient to discuss ranking criteria according to the phases 1, 2 and 3. But it is noted again that ranking 410 is performed in phase 0.

(phase 1) As already explained, ability data 500 allows computer 200 to determine the ability to establish link 305. While set 300 allows queries by topic-descriptors, it does not necessarily allow queries by ability. Ability data 500 is usually not stored in set 300, but elsewhere. By processing ability data 500, computer 200 performs ranking into higher and lower ranks. As a consequence, query 391 initially (that means in cycle (1)) processes higher-ranked records (for that the ability is to be expected higher).

(phases 2 and 3) Membership of a particular person in collaboration team 101/102 may be related to degrees of relevance. To illustrate two extreme situations: collaboration might require the membership of a particular person (such as a person having particular expertise), or a particular person might prevent any collaboration.

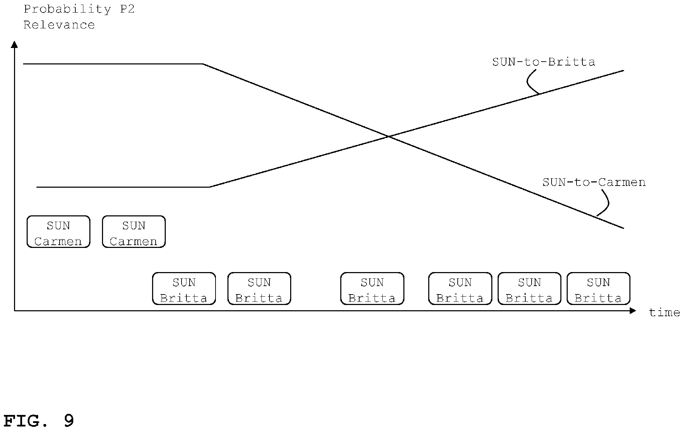

Therefore, in phase 2 (communication), the members 101 and 102 of communication team 101/102 exchange messages (i.e., via the computer) to discuss the relevance of their potential contribution to collaboration. Data for ranking that represents relevance will be discussed in the section "secondary ranking criteria". In view of the above-mentioned example with Helena, ranking 410 may have moved the record PLANET-to-Helena to a lower rank (because, for example, the record lacks confirmations, cf. FIG. 9). In that example, the situation that Helena would be invited to join the astronomers would be less likely.

In phase 3 (collaboration), collaboration team 101/102 can collaborate with success or not, and data regarding the collaboration quality is potentially available as well, here mentioned as further criteria.

The differentiation into primary, secondary and further criteria in their relation to phases 1, 2 and 3 is convenient for this overview. As details will be explained, data that represents ranking criteria may become available for computer 200 at different points in time and potentially with different change frequencies. For example, the quasi-static ability data (cf. primary criteria) may change more often than the relevance (cf. secondary criteria).

### Ranking in view of the query

By pre-processing data (i.e., before querying 430), the computer ranks the records within set 300. Computer 200 executes ranking 410 according to pre-defined criteria, such as primary criteria (ability), and - optionally - secondary criteria (relevance).

As ranking step 410 applies the same technical approach for all criteria, the description explains details with the focus on primary criteria (ability data 500 in FIG. 1).

Ranking 410 enables computer 200 to selectively respond to query 391 by returning result 392 with matching data-records in a sequence that is ordered. FIG. 1 illustrates the ordered sequence by result 392, as initial result 392(1) and repeated result 392(2) (or first and second results, the first result arrives earlier).

The concept of ranking - as used herein - is conveniently explained by assuming a record set that does NOT use ranking: When such a (not-ranked) set receives a query, it would return the result by showing one or more records that match the topic-descriptor (or by showing no result). For example, when the (not-ranked) set would receive the query to identify one or more persons in relation to the topic PLANET, it would return the result with the names of Bob and Jana, in any order ("Bob, Jana" or "Jana, Bob"). The computer then processes the result further, in the example, by checking the communication ability of both computers (dynamic ability). Checking for both would require the computer to spend resources for two checks.

Ranking differentiates the records in set 300 so that result 392 considers an order. Result 392 prefers data records having higher rank over data records having lower rank (i.e., because computer 200 processes higher-ranked records with priority over lower ranked records). Computer 200 can start to process result 392 (with the higher-ranked data record) earlier, such as by checking 440. Querying 430 in lower-ranked records may eventually not be required (and checking 440 would be skipped as well). As a consequence, the computer spends less resources because the number of follow-up activities (to querying 430) can be reduced.

Record 303 (PLANET-to-Bob) should have higher rank compared to record 302 (PLANET-to-Jana). Set 300 returns Bob (initial result 392(1)), and computer 200 can continue checking 440. In case of checking 440 (negative), set 300 provides result 392(2) that identifies Jana. In other words, the order is "Bob, Jana".

In principle, there are two options to implement set 300 to return such rank-ordered results.

(sub-set option) Differently ranked records can be separated into different sub-sets. In other words, set 300 can be divided into sub-set 311.1 (for data records with higher rank) and sub-set 312.1 (for data records with lower rank). Computer 200 processes initial query 391(1) in sub-set 311.1, and processes subsequent query 391(2) in sub-set 312.1. Queries 391(1) and 392(2) would be identical, except in pointing to different sub-sets. Such an approach may have the advantage to save computing resources such as time and storage. As the sub-sets each comprise less data records than set 300 as a whole, computer 200 would have result 392(1) earlier or would spend less resources (i.e., querying sub-set 311.1 requires less resources than querying set 300 as a whole).

(filter option) Differently ranked records can be sorted after performing a single query / result cycle (e.g., one query 391 and one result 392, no repetition (2)). The result would comprise a flag or the like (or metadata in general) that technically represents the ranking. The order can be derived by applying a filter to result 392. For example, result 392 would return Bob and Jana, and the filter would cause computer 200 to process Bob first, Jana second.

The options do not necessarily correspond to the above-introduced priority in time, but they are related. The query priority may be easier to implement for the sub-set option, and the result priority may be easier to implement for the filter option.

Combinations of both options are contemplated. For simplicity, description and drawings focus on the first option with separate sub-sets: FIG. 1 is therefore simplified and just illustrates two pre-ranked sub-sets 311.1 and 312.1. Query 391 (1) uses sub-set 311.1 and query 391(2) uses sub-set 312.1. The skilled person can switch to the filter option without the need of further explanation herein.

The description explains the sub-set option by the following example: when (ranked) set 300 receives query 391 for the first time as query 391(1), it returns result 392(1) by showing one or more data records that match topic 199, but only for the data records having higher rank. When computer 200 performs query 391 for the second time as query 391(2), it obtains result 392(2) with one or more records that match topic 199, but only for the records having the lower rank. For example, when computer 200 initially runs query 391(1) to identify a person in relation to the topic PLANET, it obtains the name of Bob (in result 392(1)). In the repetition, the computer obtains the name of Jana (in result 392(2)).

For the next and subsequent query processing, the query would access the still lower ranks, and so on.

In other words, computer 200 performs query 391 initially on the highest-ranked sub-set 311.1. If the initial query 391(1) leads to one or more person-identifiers in result 392(1), computer 200 proceeds to checking 440. Otherwise, computer 200 performs one or more follow-up queries 391(2) in one or more lower-ranked sub-sets (such as sub-set 312.1).

As mentioned, checking 440 is optional. The step is not required if - for example - set 300 would have the "no ability" records in the lowest ranked sub-set and if the lowest ranked sub-set would be ignored by the queries.

### Ranking criteria in overview

Having explained ranking in view of queries (i.e., by the purpose of ranking), the description now investigates one or more criteria. While implementations can use the sub-set option or the filter option, the description takes the sub-set option as representative example. Although FIGS. 1-2 show only two sub-sets, the ranking granularity can be fine-tuned by using further sub-sets.

As the overall target is collaboration (cf. FIG. 2), there are constraints that potentially prevent collaboration (or that potentially set limitations to collaboration), and opportunities in favor of collaboration.

For simplicity, the description focuses on the constraints and on the approach with the ranking that the computer applies to deal with the constraints. The approaches can also be understood to take advantages of the opportunities.

Simplified, constraints to collaboration lead to down-ranking and opportunities lead to up-ranking. Lack of constraints lead to up-ranking and lack of opportunities lead to down-ranking.

As communication ability (i.e., to establish the communication link) is a prerequisite for collaboration, ranking considers criteria for communication ability as primary criteria.

The description now explains how the computer processes constraints (and opportunities) in technical implementations.

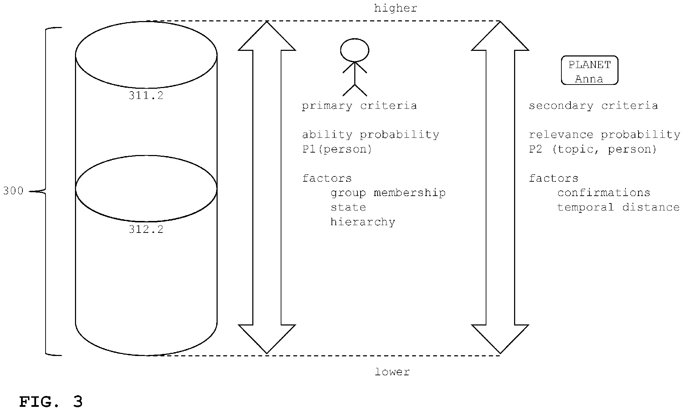

FIG. 3 illustrates ranking criteria, by showing record-set 300 divided into higher-ranked sub-set 311.2 (at the top) and lower-ranked sub-set 312.2 (below), similar as in FIG. 1. Bidirectional arrows indicate that the computer can up-rank data records (elevate a record to higher rank), or down-rank data records (reduce a record to lower rank).

To perform ranking, computer 200 can process factors to calculate probability values. The description differentiates probability values according to primary ranking criteria and secondary ranking criteria (to be applied optionally). P1 is the communication ability probability that summarizes primary criteria to a single value. P2 is the collaboration relevance probability that summarizes secondary criteria to a single value.

Simplified, the overall rank of a data record can be related to a combined probability P = P1*P2.

As used herein, probability values P1, P2 and P are relative values: up-ranking or down-ranking occurs between different data records. The computer can perform ranking by P1 and P2 separately, or in combination, for example, in the following: by just ranking records according to P1 (ability ranking only), by ranking the records according to P1 to obtain a preliminary ranking, and by subsequently fine-tune the ranking according to P2, with the preference of P1 (e.g., lower-ranked records due to low P1 are not up-ranked due to high P2), or by calculating P and ranking the records accordingly.

It is noted that the computer does not have to take both ability criteria and relevance criteria into account. The skilled person does not have to use probability values between 0 and 1, but could also apply different values. In other words, using such P-values is just an approach that is easy to explain.

Probability values P1 and P2 each can be composed from factors, and each factor represents a criterium (i.e., singular of "criteria"). P1 and P2 may have different connotations, in terms of "hard" and "soft" circumstances, respectively. The following examples explains this.

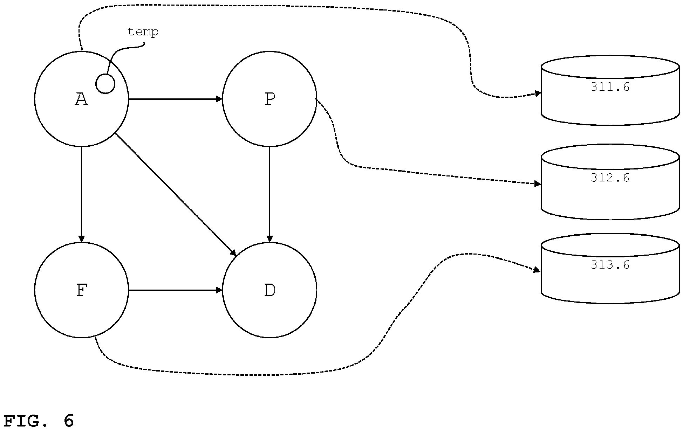

A person is not able to communicate while absent, and hence the communication link to his or her computer can not be established. Computer 200 processes this situation by an ability probability that would be zero (example for "hard"). An example to obtain P1 is given by FIG. 6. The factors for P1 are related to states.

A person who is present should be able to communicate (e.g., P1 = 1, example in FIG. 5), and this person operates a computer. The communication link can be established. But there might be other circumstances in terms of relevance, with examples in FIGS. 7-9, that would influence P2 as well (example for "soft").

By distinguishing primary and secondary criteria, the description merely explains that some ranking depends on more objective circumstances and other ranking depends on more subjective circumstances, but for computer 200 there is no difference. It processes data (with probability values) no matter if "hard" or "soft".

Computer 200 can obtain data to calculate the probability values from sources that are explained with FIGS. 5-9. The sources can - at least partially - contribute to ability data 500 as well.

It is noted that ranking as well as collecting ranking criteria is an activity that does not require a user to enter data to a computer.

### Primary ranking criteria: communication ability

In the example of FIG. 1, the user of computer 201 (acting as of for person 101 (Anna)) seeks a person to communicate (and to collaborate) for PLANET, initial result 391(1) does comprise a person-identifier, but the further result 391(2) does comprise it.

Simplified, primary ranking criteria (for the sub-sets, or for the filters) are related to the ability to establish the communication link (cf. ability data 500). As used herein, a relatively high rank stands for relatively high communication probability, and a relatively low rank stands for relatively low communication probability, cf. P1.

As persons are also users, the factors can also be calculated by considering the persons.

The factors can be related, for example, to group membership or state (of the person, details in FIG. 5, for example, data records with person 105 Ida would be down-ranked), state (cf. FIG. 6), hierarchy to other persons (details in FIG. 7, for example, data records with Julia would be down-ranked).

For example, P1 could be calculated for a particular person (by multiplication) with a first factor that represents group membership and a second factor that represents hierarchy.

### Feedback

Computer 200 does not only communicate with computer 201 (computer 201 interacts with person 101), but can communicate with multiple computers (that potentially interact with almost all persons of an organization). Over time, computer 200 is checking 440 for multiple occasions. The results of the checks can be used for ranking as well.

In a further example, despite establishing 450, a particular person may deny using link 305 (e.g., by not responding to messages), the computer could introduce a "below-1" probability factor (contributing to relevance probability P2).

### Secondary ranking criteria: relevance

Computer 200 establishes link 305 (or multiple links). Therefore, the two (or more) members of the communication team can start communicating, but some links 305 may have been established and used in vain.

To explain this, the description again takes a short excurse to the real world. As mentioned above, communication comes before collaboration. Anna and Jana would discuss their familiarity regarding the common topic (cf. FIG. 2, during the communication phase 2), and would come to a decision to collaborate or not. Potentially, Jana is not much familiar with the topic, and Anna would have to wait until Bob returns. The same constraint applies to the example with Helena.

This excurse is much simplified, the team members would review other conditions, and there is - of course - no guarantee that the collaboration team turns into a collaboration team, let alone a guarantee that collaboration will succeed. The skilled person could even brush up the computer (for phase 2) with some communication tools, potentially with a list of standardized question.

However, computer 200 applies a different approach. For ranking 410 - that is much earlier than establishing 450 - the computer may also collect data that is related to relevance. In that sense, relevance expresses further data granularity.

Query 391 does not have to be modified. Result 392 retrieves data records that match the topic-descriptor. Using ontologies does not change that principle.

Relevance data does not turn binary assignments (such as PLANET-to-Jana) to multi-level assignments, but relevance data (if considered by the ranking) prioritizes higher-ranked data records to be part of the result.

Simplified, and with details to be explained, secondary ranking criteria (for the sub-set option or for the filter option) are related to the persons as well as to their association with topics. The ranking applies to topics in general, not to particular collaboration topics. The topic can be anything, as query 391 is not yet been launched, the topic-descriptor is not yet known.

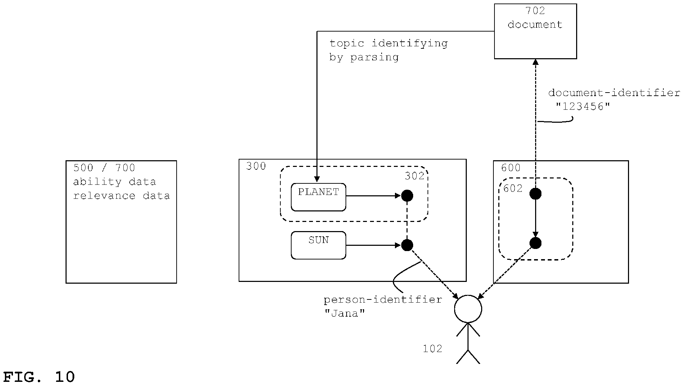

Data that represents relevance is given by way of example:
- Data regarding the number of confirmations (familiarity of a person with a topic) by other persons (being users): Data regarding confirmation can be provided by computer-only activities (such as document parsing, cf. also the example to parse document 702 in FIG. 10).
- Data regarding the type and number of documents for that a particular person is author or the like: The computer can obtain such data in form of metadata, this data does not have to the part of the set.
- Data regarding the timing when a particular person has become familiar with a particular topic (temporal distance). The computer can obtain such data from the creation time of a document, or otherwise.
- Data regarding credentials for particular topics, in form of scientific papers or the like written by the persons, as long at the data are available as topic-descriptors.

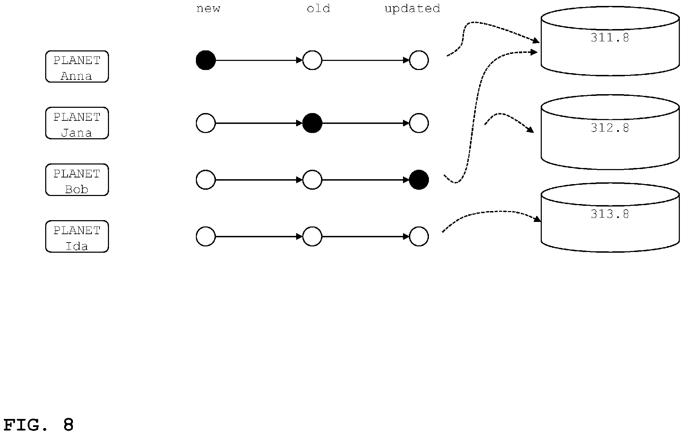

In view of the above introduce probability P2, computer 200 can process such data by individual factors. For example, and with details to be explained with FIG. 8-9, the factor may rise with every confirmation (or may fall when over time when confirmations do not arrive, etc.).

### Example for relevance

In a simplified example (without figure), a team member should be familiar with a topic in its latest development, and another team member had been familiar with that topic some decades ago. For the topic PLANET, the other member may not have realized that a couple of years ago, Pluto lost its standing to be called "a planet". Of course, the computer can not look into the other person's brain. But the computer can process data traces. For example, the computer can obtain the number of documents that a particular person has drafted. That number can be input for ranking (as a factor for relevance probability P2).

Over time, computer 200 can perform multiple assignment actions (i.e., confirmations). Such assignment actions do not belong to the method execution, but the actions leave traces in set 300 (or elsewhere) with information that the computer can use for ranking (details in FIG. 8).

As used herein, the secondary criteria are similar to the primary criteria: a relatively high rank stands for relatively high relevance probability, and a relatively low rank stands for relatively low relevance probability.

### Further ranking criteria

Although not illustrated in the figure, other criteria could be applied. Criteria can be established, for example, for the geographical location of a person. Assuming that Anna works at a particular geographical location, the ranking could up-rank data records in relation to that location. Further ranking criteria can be used as well, such as for example:
- ranking according to topic-descriptors (or other keywords) that are introduced to set 300 by users, such as descriptors for areas of interest, leading to profiles (or "fingerprints") of individual persons in set 300,
- ranking according to type, creation time and quantity of documents are that associated with particular users (cf. the discussion below for FIG. 10). For example, records for that the topics are confirmed by the persons would move up the rank. More in details, PLANET-to-Jana would move up in rank if Jana would actually confirm PLANET. Technically, such confirmations can increase P2.

In other words, data that relates to persons and that is provided by the persons can be used for ranking as well.

Or, as mentioned above, collaboration data from team experience in the past could be used for ranking as well, cf. the feedback as already introduced.

From a conceptual perspective, "relevance" is just a convenient term to discuss secondary criteria. Simplified, higher relevance might be related to collaboration success, lower relevance might be related to collaboration failure. Criteria can therefore be applied as long as the computer can access data to obtain the probability values.

### Clustering

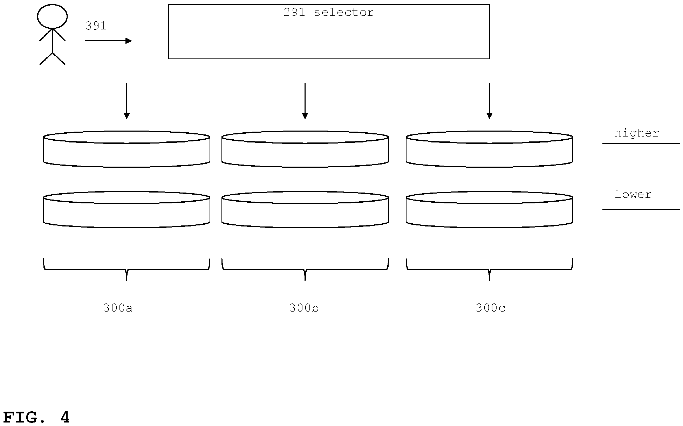

Ranking the records can be seen as clustering the records: the sub-sets can be regarded as clusters. The criteria can be seen as clustering criteria, to arrive at clustering that optimizes set 300 for ability, that optimizes set 300 for relevance and so on (cf. FIG. 4 for more).

### Ranking in view of computation speed

As the computer performs ranking before querying, questions regarding the collaboration can be "answered" in advance.

Ranking according to the first criteria (ability) potentially avoids the use of computation. The first person (e.g., Anna) would not communicate with a person who is not able to communicate (for example, due to absence), with the non-ability extending to their computers.

Ranking according to the second criteria (relevance) potentially avoids communication (in terms of computer resources) between the first person of a team member with whom collaboration appears not suitable.

### Fall-back options

It may happen that querying 430 leads to an identifier with checking 440 leading to a negative determination. For example, first person 101 (Anna) may have a question relating to legacy software, with the topic FORTRAN. Result 392 would identify a person named "Otto", potentially in a query that accesses lower-ranked records (assuming he already retired, cf. FIG. 6). However, according to checking 440 (with negative determination), it would be impossible to establish the link to a computer with Otto as the user (because, for example, Otto as status P as illustrated in FIG. 6). An optional implementation could nevertheless show his name, so that Anna could contact Otto otherwise (without computer 200 establishing the link).

### Query routing

Primary, secondary and even further ranking criteria might be conflicting. For example, ranking by primary criteria (i.e., ability) would rank a record up, but ranking by secondary criteria would rank the same record down. In theory, ranking could lead to multiple differently-ranked sets. Each set can have two or more sub-sets (or filters) that are optimized for different criteria (or even in more granularity for probability factors).

For example, computer 200 could do ranking 410 according to geographical locations (that would be related to communication ability). Computer 200 would establish link 305 (users in communication team 101/102 with the members being co-located). Such scenario may be much desired for some topics ("music performances"), but should be avoided for other topics (e.g., PLANET). There is a simple reason for that: communication regarding natural science would usually not be restricted to teams with co-located members.

FIG. 4 illustrates the concept of query routing to differently ranked sets.

In the example, computer 200 processes query 391 (cf. FIG. 1) for the topic PLANET. Computer 200 processes query 391 by selector 291. Selector 291 applies a rule and selects set 300a that is optimized for the overall topic "science". Ontologies can identify the overall topic (e.g., PLANET should belong to SCIENCE).

In a further example, computer 200 processes query 391 for the topic "MUSIC-PERFORMANCE", selector 291 forwards query 391 to set 300b that is optimized for the overall topic "location". Ontologies can relate the topic-descriptor MUSIC-PERFORMANCE to (same) location, so that selector 291 takes location-optimized set 300b.

In a still further example, computer 200 processes query 391 for the topic "English", selector 291 forwards query 391 to set 300c that is optimized for the overall topic "languages" (Ontologies can identify the overall topic as well so that selector 291 can operate accordingly).

It is noted that computer 200 (and selector 291) can optimize the sets (i.e., the ranking) by processing historical queries. The figure illustrates sets 300a, 300b and 300c with two sub-sets each, but this configuration is just an example. Applying filters is also possible.

It is further noted that query 391 can be associated with data that relates to first person 101, such as to her physical location. In other words, person 101 does not have to specify his or her physical location (at least not when computer 201 interacts with person 101 being the user of computer 201).

Still further, data in relation to first person 101 is not limited to location. It is contemplated to provide differently ranked sets for person types. For example, and with details to be outlined with FIG. 10, first persons with different document profiles (or other profiles) may be served by differently ranked sets. If Anna (first person) would be an expert who created "many" documents, she would be find a communication team with multi-document peer persons. Or, she may find the team with person in the same or similar position within an organization.

### Communication conditions

FIG. 5 illustrates a communication diagram that symbolizes persons 101 to 109. In the future, some of the persons might communicate (phase 2, FIG. 2) and subsequently collaborate, phase 3). As explained above, computer 200 establishes communication link 305. The computers at both sides of the link have users, and the users are the members of the communication team (end of phase 1, outcome of method 400). A communication team can turn into a collaboration team. It is therefore suitable to take relations between persons into account.

FIG. 5 illustrates team 101/102 (for the computer with identifiers Anna and Jana), team 101/103 (Anna and Bob), and team 101/102/103 (Anna, Jana and Bob).

### No mental activity

Once communication link 305 has been established, the users (at the computers at both sides of the link) can use the link to communicate. But computer 200 processes data, it does not instruct a person to communicate (or even to collaborate) with somebody else. In other words, computer 200 may communicate the outcome of the processing (e.g., identify team 101/102), but the persons can ignore that. Further, the computer does not prevent persons to communicate (and to collaborate) outside the team that it identified.

### Pairs

The set size (or "cardinality") of communication team 101/102 corresponds to the number of persons in the team. A team with exactly two persons is a "pair", such as in the team 101/102 (Anna/Jana).

### Groups and inter-group ranks

As computer 200 processes records (in set 300), computer 200 requires computing resources for such processing. Limiting computation is therefore advisable.

The description therefore shortly introduces the concept of person groups. A group is a set of persons that share a common property, for example the membership in an organization, a company or enterprise, a professional organization or the like.

The membership of a person to a group can be a ranking criterium, because - in a first approximation - membership in a group implies that (one or more) communication links 305 between their computers can be established. Therefore, group membership is discussed here as belonging to primary criteria. (Membership can also serve as relevance criterium.)

There is an assumption that communication occurs within a group, or at the edges of group. A group is not necessarily a communication team, but - even without ranking - computer 200 uses its resources to process data in relation to the group. In a simplified example, computer 200 is a computer that is dedicated to an organization, so that the amount of data is limited by the number of persons that belong to the organization (hence to the number of computers that are in used by the organization).

As illustrated, persons 102 to 108 are associated with pre-defined groups of persons. The figure illustrates groups by dashed circles: Group 191/192 comprises persons 102, 103, 104, 105, 106, 107 and 108 for that the figure shows the symbols between circles 191 and 192. Group 191/192 is an example for an organization, and group 191/192 is also an example for a person (such as person 101) outside the organization who seeks collaboration with somebody inside the organization. Circle 192 would be considered as the edge of group 191/192. Group 191 comprises persons 101 to 108, inside circle 191, that is group 191/192 in logical union with person 101. Group 191 is an example for an organization.

Assuming that person 101 acts as the first person, the computer would process data to eventually establish the link to computers in use by one of person 102 to 108 (as second person). In that sense, the membership of person 101 to group 191/192 or to group 191 is not relevant. Computer 200 would identify a second person with (e.g., for topic-descriptor PLANET) within group 191/192.

For such an assumption, the computer would have to query the existence of records (7 records, with topic-descriptor-to-person-identifier).

As mentioned above, ranking 410 uses communication ability as a criterium (primary). In the simplified example, there are three ranks for three groups. Group 194 (with persons 103 (Bob) and 104 (Britta)) can be represented in set 300 with a sub-set 311.5 at "high rank". (For simplicity, the figure also adds Anna to this sub-set). Group 195 (with persons 102 (Jana), 108 (Jakob) and 107 (Julia)) can be represented in the set with sub-set 312.5 at "medium rank". Group 193 (with persons 105 (Ida) and 106 (Ina)) can be represented in the set with a sub-set 313.5 at "low rank".

The example is simplified and assumes that ability is also related to the persons, and that the sub-sets are ranked according to properties of the persons.

Computer 200 performs query 391 by starting from the sub-set with the highest rank. In the example, for the topic-descriptor PLANET, computer 200 initially executes query 391 in sub-set 311.5 for group 194 and identifies person 103 (Bob). Communication link 305 to a computer with Bob as user cannot be established (checking 440 negative). Therefore, computer 200 repeats query 391(2) with the sub-set just one rank below (medium rank, cf. sub-set 312.1 in FIG. 1, sub-set 312.2 in FIG. 2). The result 392(2) identifies person 102 (Jana), and checking 440 (positive) confirms communication ability (for the computer having Jana as user).

Once the computer has established link 305 (step 450), it can stop querying 430.

Some persons, such as person 105 can not collaborate with person 101 (or with other persons) for other reasons. In the example, persons 105 and 106 would not be able to collaborate, and the sub-set would have the lowest rank (cf. group 193, sub-set 313.2). In the example, for person 105 (Ida), set 300 may comprise PLANET-to-Ida, but for some other reasons, communication is not possible.

Person 109 does not belong to any of the groups. Nevertheless, the figure shows person 109. Again, membership in a group can be used as a ranking criterium (belonging to the primary criteria), but - provided that a record has a matching topic-descriptor - persons outside a group can be identified, by the query.

### Example for ranking input

FIG. 6 illustrates a state diagram to discuss ability-to-communicate aspects. The diagram can be applied for any person 101 to 109 separately. As computers are in use by persons (e.g., person 102 "Jana" is the user of computer 202), the aspects also apply to establishing the communication link between computers.

On its right side, the figure also illustrates a simplified ranking. Records for the persons could be distributed, for example, to 3 ranks (sub-sets 311.6, 312.6, 313.6).

For example, group 192 (in FIG. 5) is a company and the candidate (to be identified as second person) needs to be a member of the company, otherwise he or she would not be able to communicate. The association with the group can have pre-defined levels or states (small circles) with state transitions (arrows), for example as follows:

A person has the state "active (A)" by being an employee. A person has the state "passive (P)", following retirement. Passive persons could be reached if needed. A person has the state "former active (F)" because he or she changed to a different company. Such persons could be reached only exceptionally. Absolute non-ability of collaboration is reached when a person dies (D). The states can be considered as ability data 500 (cf. FIG. 1). Establishing communication link 305 to a computer in use by an active person (A) has the highest chance for success.

From a different perspective, a person in state (A) potentially has access to computer 201 (cf. FIG. 1), a person in state (P) may have access to a computer, but potentially not to computer 201. A person in state (F) should have access to a computer, but not to computer 201 (because he or she in not employed by the same organization at the first person).

In view of FIG. 5, company members in states (A) and (P) would be persons in group 192 except sub-group 193 (i.e., persons 101, 102, 103, 104, 107 and 108), persons 105 and 106 could be in state (F), and person 109 would be in (D).

The distribution to differently ranked sub-sets could follow a simple approach to rank (A) high (311.6 even for temporary absence), rank (P) into medium rank 312.6, and rank (F) to low rank 313.6). It is again noted that ranking is performed for the records in set 300. Set 300 comprises topics and person-identifiers, but does not have to comprise anything that would identify particular computers.

Computer 200 can obtain states from sources that usually exist in companies, such from a human resources database (not necessarily part of computer 200). Such an approach may even provide further isolation data, data from a HR database would not be present in set 300.

The state semantics (A), (P), (F) and (D) in FIG. 6 are just examples, the skilled person can differentiate other states.

### Probability

The description gives the "employment state" just as a convenient example for a single ranking criterium. It is possible to take the states as a factor for ability probability. State (A) can be allocated to a probability value 1 (active employees are expected to collaborate), (P) can be 0.5, (F) can be 0.2, and (D) must be 0.

### Timing aspects

States can be further differentiated, for example, by turning from static to dynamic states. For example, an active person (A) may temporarily not be able to collaborate (vacation, sick-leave etc.). The figure just illustrates a sub-state "temp". In the example of FIG. 5, Bob 103 would be identified is result 392(1), but due to temporary absence, he does not become the second person. Establishing communication link 305 to Bob's computer is not possible, at least temporarily.

Such a temporary state modification could be given by factors as well.

In general, the states are available to the computer (in form of data) before the query, and do not have to be communicated to the computer.

The frequency of change for such states is relatively low so that the impact on the set is relatively low. For example, a person changes its state from (A) to (P) only once, and temporary changes to sub-states (such as to represent temporary absence) are expected in the time-granularity of days.

### Collaboration restrictions

Collaboration can be restricted from relations between persons. In some situations, collaboration would have to be avoided, for example, for sub-groups that are separated by information barriers or the like (metaphorically: information silos). In the example of FIG. 5, persons 105 and 106 could be members of group 193 that is involved in a protected project and the constraint that person 101 should not collaborate with members of group 193. For such reasons, collaboration may be factored into overall probability.

### Collaboration and hierarchy

Occasionally, communication (and collaboration) may become inefficient due to differences in time to communicate or collaborate, social standing or the like (e.g., in collaboration regarding a common topic, between a new employee and a company leader).

FIG. 7 illustrates a hierarchy diagram for persons, and on its right side, corresponding sub-sets 311.7 and 312.7 (or corresponding filters). The diagram is convenient to discuss probability. Anna 101 could - in theory - communicate with person 107, but Anna 101 could be a member of a sub-ordinated group and person 107 (Julia) could be a member of a supra-ordinated group. The computer should not prevent such communication, but the computer could prioritize similar hierarchy levels for the query. The sub-sets are therefore ranked accordingly.

### Probability values as isolators

The examples of FIGS. 6-7 refer to ranking that can be performed with data that may be access-restricted. For example, if the computer associates a person with the state (A) or with the states (P) is not relevant for first person 101 to know, at least not when the computer executes the method. The state may even be secret (in that sense that the first person 101 is not allowed to see this. State data (cf. FIG. 6) and hierarchy data (cf. FIG. 7) go into probability values (such as P1 or P2), but retrieving the data from these values alone is not possible. Using probability acts as an "isolator".

The description will provide a further example for access-restriction further below (FIG. 10, access to documents).

### Real-time requirement

Computer 200 should provide the processing outcome (i.e., the identification of communication team 101/102) to first computer 201 shortly after computer 201 interacts with first person 101 to obtain the topic-descriptor 199 (e.g., PLANET). In other words, the outcome should be available to user of computer 201 during the same session (within seconds or fractions of seconds).

Ranking 410 in method 400 may lead to the following advantages: The time to execute the query (and to retrieve the result) is relatively short (in comparison to a query against an un-ranked set, with relatively more records). The probability to find a computer with checking 440 (positive) is also increased (compared to a non-ranked set) because ranking 410 was executed earlier according to expected ability probability (primary criteria). As ranking 410 is not the same as checking 440, querying 430 can be repeated against lower-ranked sub-sets as long as the second person is not identified.

FIG. 8 illustrates records (such as PLANET-to-Anna, PLANET-to-Bob etc.), in different states (in form of metadata or the like).

The illustration is simplified and takes the states "new", "old" and "updated" as examples. The states can be defined by the temporal distance between a particular person working (in the broadest sense) on a particular topic (e.g., PLANET) and the time a record with the corresponding topic-descriptor (e.g., PLANET) becomes available to computer 200.

The process of assigning (i.e., computer 200 receiving a record that represents the assignment) is less relevant.

For example, the following can be assumed: Anna has written a paper regarding PLANET recently and has posted the document to computer 200 (posting in the sense of adding the document to the set). Therefore, computer 200 is able to parse the document and to establish the record PLANET-to-Anna). This assignment record is in the state "new" (because the document is a recently created document).

For example, Jana should have written her paper (also regarding PLANET) when she was a student, for example, in 1991. Although the record PLANET-to-Jana arrived at set 300 recently - for example in the year 2021 - a "document age indicator" calculates a temporal distance of at least 30 years (from the creation time of the document to the ranking step). The document age indicator does not have to be updated frequently (the update frequency may be once a year). The assignment is therefore in the state OLD.

For example, Bob should have written his paper (also regarding PLANET) being a student in 2001, but should have followed up by writing (and publishing) further documents in recent years (e.g., in 2011 and 2021). The state is changed to "updated". In this simplified view, state transitions could go from "new" to "old" and from "old" to updated". In case of PLANET-to-Ida, the state may be missing.

Computer 200 - when performing the ranking - can associate the states with probability factors, for example, for "new" and "updated" with factor 1, for "old" with factor 0.8, for "missing" by factor 0.5.

FIG. 8 illustrates that ranking leads to a distribution accordingly, into subsets 311.8, 312.8 and 313.8 (from higher to lower ranks). The dashed arrows indicate that, for example, new and updated documents would lead to highest rank (subset 311.8), old documents would lead to medium rank (subset 312.8), and documents without states to lowest rank (subset 313.8).

Again, computer 200 can use probability factors to calculate overall probability values. For example, the employment or hierarchy states (cf. FIGS. 3-4) could be factored in.

FIG. 9 illustrates the computer processing relevance criteria (secondary criteria) in a probability-over-time diagram. The diagram illustrates relevance probability P2 (cf. FIG. 3) as a function of confirmations (i.e., repeated assignments) over time. The record SUN-to-Carmen was initially created (and confirmed), the initial P2-value for that record is however decreasing over time. For the record SUN-to-Britta, the situation is different, with every confirmation, the probability value P2 increases.

The skilled person can track the confirmations and the like by metadata, and can make metadata available to computer 200 for ranking 410.

### Documents

The description has explained a way to establish communication link 305 between computers 201 and 202. The link enables users to communicate (i.e., by computer-mediated communication).

From a slightly different perspective, there are two further aspects to mention: (a) Computer 200 can also establish an access link from the user of first computer 201 to document 702. Computer 200 can thereby use an approach that is similar to establishing communication link 305, as explained. (b) For ranking 410, computer 200 can also use relations between persons and documents, for example, by using document-to-person relations (or vice versa) as similarity criteria.

FIG. 10 illustrates set 300 (with records that represent topic-to-person associations) and set 600 (with records that represent document-to-person associations), and illustrates relations by graphs. For example, there is a tree in set 300 with nodes PLANET and SUN having edges to node "Jana", on node-edge-node branch is record 302. There is single-branch tree in set 600 with the nodes for document 702 and for "Jana" (i.e., record 602). Computer 200 does not have to present graphs to users, the graphs are just illustrated here for convenience of illustration.

Document record 602 (shown as rectangle with dashed line) is a data-structure that represents at least a single association from a particular document to a particular person, such as from document 702 to person 102. Record 602 comprises a document-identifier (illustrated by a node symbol, to identify the document), a person-identifier (node-symbol as well, as in the records of set 300), and an assignment (illustrated by an arrow-edge between the nodes). In the example, record 602 could be "123456-to-Anna". It is noted that record 602 identifies document 702 (e.g., by document-identifier "123456") but does not have to comprise it. In other words, the document-identifier can be pointer to the document (e.g., implemented by a link, by a URL or the like).

Document set 600 comprises a plurality of document records, not only record 602 but further records as well. It is possible to generate the records at the time when the documents are created. This is convenient, but not required. As persons are usually the authors of documents (and usually mentioned by name), parsing a document allows to identify its author (e.g., Jana).

Parsing a document also allows to identify a topic (e.g., PLANET). An arrow from document 702 to set 300 symbolizes that parsing can be an approach to provide set 300. Techniques are known in the art.

To establish the access link, computer 200 determines an access condition: the first user would be allowed to access a particular document. (This is similar to the above-explained ability condition, i.e., for the possibility to link computers 201 and 202).

Accessing document 702 can be differentiated - by conventional technical implementations - into categories such as: Read only (R) (Read and write (R/W)), partial or full access (e.g., access to the document title only or to the document as a whole, access to a summary portion only, access to bibliographic data only, to the title only, etc.), author visible or author hidden.

In a slightly modified version of computer-implemented method 400, computer 200 would perform ranking 410 (the records in set 300), obtaining 420, querying 430 (applied to document set 300) and establishing the access link (from the first user to the document). There is a further step: once the query results in a record that leads to a person, the records in set 600 lead to a document. For example, the query in set 300 leads to Jana, looking up in set 600 leads to document 702.

For example, Anna would be the user of computer 201 (not shown in FIG. 10, but show in other figures), and computer 200 would obtain the first person identifier (i.e., "Anna") and the first topic-descriptor 199 (e.g., PLANET). Computer 200 would then query the pre-ranked document set 300, look up in set 600 and would establish the access link from the user of computer 201 to document 702. Record 602 indicates that Jana is the author of document 702 so that - at least implicitly - Anna can contact Jana (provided that the access rules give the author as "visible").

For ranking 410 (ranking in set 300), criteria can be applied likewise. Assuming that the query identifies a particular document 702 and that Anna has "title only" access, computer 200 would establish the access link (i.e., telling Anna that a particular book exists, and potentially telling metadata such as author information). Anna could then communicate with the authors (cf. method 400 to find the computers) to obtain full-text permission.

As document-to-person associations (in set 600) and topic-to-person associations (in set 300) are usually also available to first person 101 ("Anna"), such relations can be used in the following:
- Set 300 can be ranked differently for different types of first persons (characteristics stored in the computer, fingerprints). For example, records for persons with relatively high number of associated documents could be ranked higher than records for persons with relatively low number of associated documents. This has the consequence that the first person would find the second person being his or her peer (in the sense of persons with multiple documents).
- Set 300 can be ranked differently as explained with FIG. 4. In this case, selector 291 can take data derived from documents into account.
- Search terms can be adjusted, so that, for example, first person Anna being a frequent author would have more search options (to communicate the topic to be searched) than a first person who is not relate to documents.

Although the description uses positive examples, access restrictions can be implemented as well: It can be assumed that, for example in FIG. 5, person 105 (Ida) may be the author of that book, but the communication restrictions (between computer users) apply as knowledge restrictions to their documents. For Anna (being the first person 101), computer 200 may establish the access to a document created by Ida (potentially in the query repetition, because the records might be low-ranked). Due to the mentioned group separation (cf. FIG. 5), the access to the document may be "title only" allowed. Anna may see only the title of the document.

### Further Aspects

The description now summarizes some aspects regarding the records in set 300. As already outlined above, the records can have a variety of origins. Computer users can enter topics into computers in form of short statements or keywords in human-understandable form (and the computer can convert the statements into topic-descriptors). In addition to that, computer can parse documents to create topic-descriptors and person-identifiers. Other ways to enhance set 300 had been explained (such as the confirmations). The records are therefore not limited to information that are entered by users. The records rather reflect what documents tell about persons.

Some of the sources may contain data that is restricted in use (e.g., personal data is usually confidential data). Nevertheless, such data can be considered. The above-described ranking may use restricted data (cf. FIGS. 5-9) but the rank of a record does not indicate why a particular rank has been allocated. A record may be low-ranked because the person-identifier points to a person in status passive (P) (cf. FIG. 6, that is confidential data). Details had been explained above, for example in the context of isolating probability values. As there can be further reasons to down-rank a record the confidential nature of the reason would no longer be visible from set 300 (not before querying 430, and not after querying 430).

Further, the rank of a particular record does not have to be communicated to a user. In the example, Anna may not even realize that computer 200 may repeat the query by accessing lower-ranked records.

### Further considerations in view of intentions

The description has explained how intermediate computer 200 establishes communication link 305 between computers 201 and 202 for situations in that intermediate computer 200 finds one or more matching topic descriptors in a set of records. For example, the descriptor PLANET (from computer 201, Anna being the user) is matched to PLANET in the records, and the link goes to computer 202 with user 102 ("Jana") who is familiar with PLANET. This is simplified, and intermediate computer 200 does some more. For example, mainly to speed up processing, intermediate computer 200 performs pre-ranking so that it can process higher-ranked records with priority over lower-ranked records.

Such an approach is optimized for situations in that first person 101 (i.e., the user of computer 201) has the intention to communicate (and potentially to collaborate) with a second person regarding a particular topic. In other words, the intention corresponds to topic-descriptor 199, and - vice versa - topic-descriptor 199 describes a topic for both persons to communicate. For example, first person 101 seeks somebody for talking about planets.

As explained, ranking reduces the chance to identify a second person who would fit according to topic-descriptor 199 (e.g., PLANET) but who would not fit for other reasons. The description has explained such situations, for example with FIG. 5, with the records for persons 105 and 106 being in sub-set 313.5 at "low rank". The description also explained an ability check (ability of computer-implemented communication, for example, establishing communication link 305 to Bob's computer was not possible, at least temporarily).

The approach requires intermediate computer 200 to obtain an identifier (e.g., Anna) of the first person and to obtain a first topic-descriptor (e.g., PLANET). Assuming that computer 201 and intermediate computer 200 are communicatively coupled, it would be sufficient - in principle - if the first person uses computer 201 to select first topic-descriptor 199.

### In case of other intentions

To stay with the same person (Anna), the description now continues with a discussion for alternative scenarios. She may have an alternative intention to communicate (and potentially to some-how collaborate) with a second person, but the particular topic for that alternative may not be relevant.

Intentions can be related to field of interests, to everyday activities, but not necessarily related to activities of the organization (cf. ranking with FIG. 5), for example, not necessarily related to employment state (cf. ranking with FIG. 6), not necessarily related to hierarchies (cf. FIG. 7), or not necessarily related to documents (cf. FIG. 8).

The description uses a contrasting, but real-life example: the field of interest could be described by terms such as "food" or "nutrition", or even described by a combination of "food" and "amusement". There is no need to define the field exactly, and hence there is no need to provide a topic-descriptor or the like for such field.

For illustration, the example is supported by a couple of assumptions.
- First, as every person needs something to eat every couple of hours, he or she would spend some time, for example, to seek companions, to discuss the quality of food, to make reservations at restaurants, etc., but also to switch off computers (i.e., computers 201, 202 with impact on computer-implemented communication).
- Second, the organization (that operates computer 200) would not imply restrictions for communication that are related to eating. While in the example of FIG. 5, intermediate computer 200 would not establish particular links (e.g., to let Anna and Ida communicate, cf. FIG. 5), both should be free to meet for eating.
- Third, computer users may let their computer to call external services, such as external collaboration platforms that are not identical to intermediate computer 200. But such external services are also communicatively coupled to computers 201, 202. Accessing external platforms by computers that belong to the organization may cause some risks, for a number of reasons. Some of the risks may be related to data security. For example, Anna may accidentally disclose sensitive information (for example by mentioning a confidential project or the like). The external service may collect data that could track her meeting preferences with others, so that some of the above described communication (e.g., regarding the topic "PLANET") may be exposed to non-authorized readers. Further, the external service even might conduct reconnaissance activities.
- Forth, the organization may therefore encourage people to use intermediate computer 200 for such alternative scenarios as well. Of course, Anna may accidentally mention sensitive information, but that information would remain protected (in computer 200, behind firewalls or the like).

However, if intermediate computer 200 (as described so far) would be used for such everyday activities as well, some technical constraints are expected, among the following:
- Queries (such as query 391) may introduce ambiguity.
- Queries may have to be repeated, in lower-ranked subsets. But repetitions increase the computation load in terms of computing resource spending.
- Queries may not lead to results, because the searchable data may not fully encompass everyday activities (As a side-note, users might become frustrated and might stop using organization-internal platforms).

In a fictious example, a restaurant called "The Planets" should be located nearby an office of the organization. It has eight or nine tables, the smaller tables are called after the smaller planets, the largest table is called "Jupiter" and one table "Saturn" has the seats arranged in in ring shape. Reservations should be made in advance.

In this alternative scenario, Anna should have the intention to go for lunch with some colleagues, and she would type "The Planets" into her computer (i.e., computer 201), she may also type "PLANET".

### Query routing

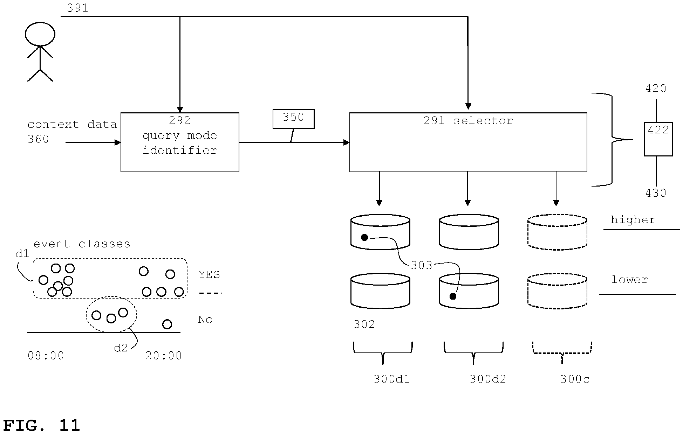

FIG. 11 again illustrates the concept of query routing to differently ranked sets (cf. FIG. 4), but the figure also illustrates a further module: query mode identifier 292. On the right side, the figure symbolizes that the intermediate computer (with selector 291 and identifier 292) can perform the step selecting 422 a particular set (300d1, 300d2) of records (following step 420, preceding step 430, cf. FIG. 1).

Set 300 (cf. FIG. 1) is separated into at least two separations (e.g., 300d1, and 300d2, "horizontal separations"). The separations each have at least a higher-ranked sub-set and a lower-ranked sub-set (as outlined by the vertical arrangement of the sets in FIGS. 3-8). In step executing 430 the query 391 (cf. FIG. 1), intermediate computer 200 can initially access the records of the higher-ranked sub-set in one of the separations. The selection of the separations (e.g., 300d1 or 300d2) corresponds to query mode 350.

Identifier 292 receives query 391 and receives context data 360 (e.g., the present time, the day of the week), determines query mode 350, and sends a flag or the like (indicating the mode) to selector 291.

FIG. 11 is simplified by showing record 303 in the higher-ranked sub-set (in selection 300d1) or in the lower-ranked sub-set (in selection 300d2).

Query mode 350 depends on query 391 and on context data 360, according to one or more rules. For convenience of explanation, in the example, query mode 350 should be an exclusive binary mode that corresponds to the separations d1, d2. But in general, mode 350 has attributes that correspond to the separations.

It is possible to have a default rule that - for the absence of context data 360 - lets selector 291 forward the query to a default separation.

In a first implementation, the rules can be implemented as pre-defined rules. For example, identifier 292 checks the person identifiers (e.g., Anna) against a pre-defined list (white list, black list) so that selector 291 forwards query 391 to an appropriate separation.

In a second implementation, query mode identifier 292 can be implemented by a machine-learning (ML) tool.

In view of rule adaptability, the first implementation (pre-defined) is more static, and the second implementation (ML) is more dynamic and more flexible.

### ML

FIG. 11 illustrates the ML-implementation by way of example. Implementing mode identifier 292 as a ML-tool avoid pre-defined rules (including a pre-defined rule to identify the mode) to be programmed manually.

It is possible to collect descriptors of historical processing event data for intermediate computer 200, such as the following:
- Event data that describe topic-descriptors 199 and person-identifiers for past queries (e.g., PLANET/Anna)
- Event data that describes queries 391 and results 392 (optionally with the indication of initial performance (1) and repetition (2))
- Event data that describes links 305 that had been established in the past (optionally with the circumstances, descriptors, query/result etc. that led to the link)
- Event data that describes follow-up activities (e.g., feedback collected from users actively, or collected more passively by monitoring user behavior).

For example, the collection comprises links that had been established over time from computer 101 (Anna) to other computers such as computer 102, or to other computers within the organization: In the example, the links can be associated with PLANET or other topic-descriptors. Optionally, the links can be associated with overall terms (from ontologies, e.g., SCIENCE that would be an overall term).

The collected event data are historical event data because the data had been collected prior to receiving query 391. Event data have properties, and the description explains properties by way of example:
- The first property can be based on relations to the (historical) success (or failure) of the communication (YES, NO). Such data can be collected by way of feedback, or otherwise. For example, the successfulness of a link can be measured by monitoring the communication that uses the link (e.g., sharing documents between Anna and other persons, number of communications following that first connection etc.)
- The second property is simply a time-stamp, for example for the time of the day Anna had submitted query 391. There is however no need to relate the historical links to particular persons.

The computer (i.e., the ML-tool during training) can cluster historical event data into classes (i.e., event classes). The example shows two event clusters, a first cluster (d1) with YES-links for that the queries (in historical executions of step 430, cf. FIG. 1) had time stamps in the morning or afternoon hours, and a second cluster (d2) with NO-links that have time stamps around noon. The diagram also shows some historical event data (such as data regarding links) that are not clustered. The event clusters are related to the separations (here 300d1 and 300d2).

In general, the event clusters represent correlations between event properties, and detecting these correlations (by the machine-learning implementation of identifier 292) can set query mode 350.

Intermediate computer 200 does not have to consider the semantics of such correlations. It does not matter, for example, if food-related communication occurs at lunch time and more work-related communication occurs the other times (communication pattern change during the day). Intermediate computer 200 simply learns from historical event data and becomes able to differentiate new events (e.g., new queries) accordingly.

When query 391 arrives (i.e., a new query), for example, for PLANET, query mode identifier 292 determines a cluster that fits query 391. This determination can be based on similarity rules or the like. For example, if the query for PLANET arrives in the morning hours, the cluster would be d1, if the query for PLANET arrives around noon, the cluster would be d2.

The ML-tool (in identifier 292) does not have to consider the underlying semantics. For illustration only, in the example, there is higher likelihood to have communication links that are established to let people eat together during lunch hours. The clustering that does not have to be applicable for all event data and not for all potential users. The modes do not have to be named (and do not have to carry semantics), it is sufficient if the modes can be differentiated by the computer.

For example, the d1 mode would correspond to a cluster for historical links (in SCIENCE, with success feedback), and the d2 mode would correspond to a cluster for historical links (with "failure feedback" in respect to SCIENCE). Negative feedback (for example for SCIENCE) is not a negative statement for particular users at all. For example, Anna may use computer 101 (as described above) in the before-and-after lunch hours "successfully (positive feedback), and she may use computer 101 during lunch hours for activities for that success or failure of the communication do not matter (at least not for the organization). For other users, the link clusters may look different and - optionally - the computer can create user-specific event classes (The d1 class would be different for different persons, different for Anna and other persons, cf. FIG. 5, but separation 300d1 can be the same). To give a further example, the d2 cluster may be centered around the evening hours, for other persons.

Depending on query mode 350 (e.g., d1 or d2), the technical efforts for computer 200 can be made different. Accessing separation 300d1 in query mode d1 allows the computer to identify matching records (e.g., record 303) in the initial cycle 391(1)/392(1), because record 303 would be in the higher-ranked set.

Having two query mode does not prevent the computer from establishing links. Accessing separation 300d2 in query mode d2 allows the computer to identify matching records (e.g., record 303) in repetition initial cycle 391(2)/392(2), because record 303 would be in the lower-ranked set. (The number of historical repetitions can be used as event data and could serve as clustering criteria.)

The computer users do not have to be aware that the computer uses different modes. Computer 200 does not have to receive an explicit mode indication. For example, there is no need for the computer to ask users if they seek communication in an everyday activity (such as eating) or not. Computer 200 simply interacts and operation mode identifier 292 identifies the mode automatically.

The computer operating in a particular mode does not preclude establishing a communication link. For example, Anna will very well raise a query for PLANET during lunch hours, computer 200 may access the higher-ranked records in the "wrong" separation first, but eventually it will access the records in the "correct" separation.

As users may switch the intention relatively quickly, the approach with the cluster-derived query mode must not be perfect. Running the query according to the detected mode helps to speed up the query and may result in higher success rates.

### Long-term changes

Establishing mode rules by machine-learning can allow overwriting rules. When the historical event data change, the event clusters can change as well.

### Mismatching

Shortly returning to the mode identification, the description now revisits the cluster properties.

The first property can be based otherwise. The first person may have an intention to communicate (and potentially to collaborate) with a second person, but topic-descriptor 199 would not fit to that intention. In other words, topic-descriptor 199 describes something that is not the intention. Topic-descriptor and intention may not fit (intention mismatch). This may be an obstacle for efficient communication (but a hidden obstacle).

But technically, computer 201 interacting with the first person may still receive the topic-descriptor (e.g., PLANET), computer 200 would execute query 391 and would spend computing resources. In other words, when intermediate computer 200 obtains topic-descriptor 199 (cf. step 420), it processes topic-descriptor 199 in the next steps, regardless if topic-descriptor 199 describes the intention or not.

The description has already explained the concept of query routing to differently ranked sets (cf. FIG. 4), with selector 291. There are same approaches and rules to operate selector 291 (cf. ontologies, geographical location, languages spoken etc.)

In the alternative scenario introduced with FIG. 11, computer 200 can identify the intention and set up the routing accordingly. The operation mode would be related to the intention.

### Steps to resolve query ambiguity

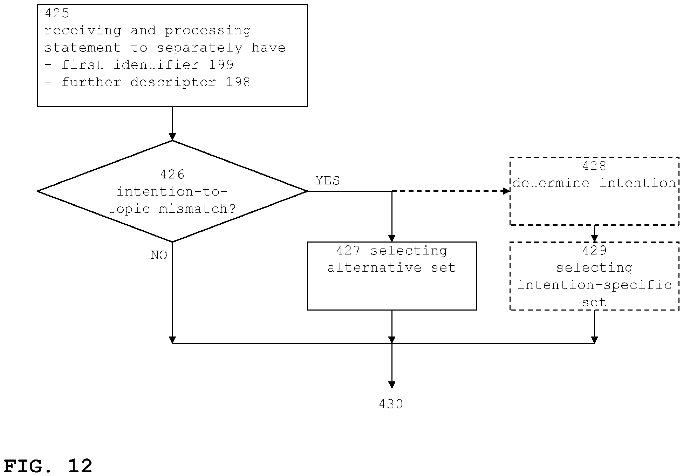

FIG. 12 illustrates a flow-chart with further steps 425-429 that can optionally be executed prior to the step querying (cf. step 430 in FIG. 1). Intermediate computer 200 can perform the further steps simultaneously with step 420 obtaining topic ID (cf. FIG. 1). By executing these steps, intermediate computer 200 can solve the above-mentioned query ambiguity.

Intermediate computer 200 receives (as step 425) one or more further descriptors 198 (from computer 201, in addition to receiving topic-descriptor 199, cf. FIG. 1). Computer 200 can obtain further descriptor 198 together with topic-descriptor 199, or otherwise. The following options are contemplated:
- Computer 200 receives a statement in natural language, such as "Let's go to 'The planets' on Wednesday". In the example, it comprises a string that is similar to PLANET (i.e., 199), and comprises further descriptors "Let's go ... on Wednesday" (i.e., descriptor 198).
- Computer 200 receives a statement with topic-descriptor 199 only: PLANET. This example fits to computer 201 presenting topics to select from pre-defined lists.
- Computer 200 receives a statement with topic-descriptor 199 only: PLANET, but computer 200 has also receive data - in the function of further descriptor 198 - from previous user interactions (during a pre-defined time interval in the past), such as collections of previous questions (from the same user, here: Anna).

Computer 200 now has - in separate data structures - first topic-descriptor 199 and one or more further descriptors 198.

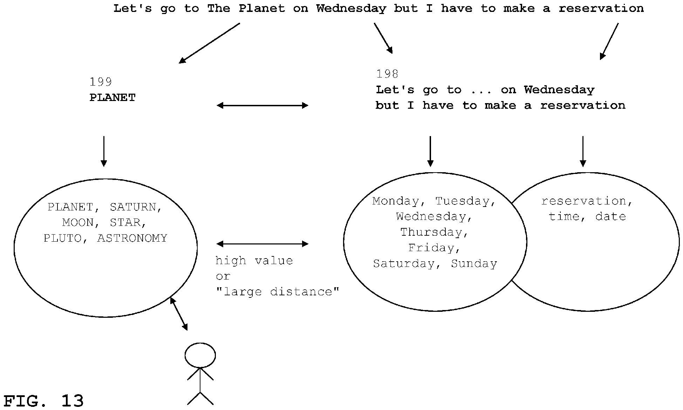

Next in step 426, computer 200 evaluates first topic-descriptor 199 and further descriptor 198, determines if there is a topic-to-intention match, or mismatch. (The description will explain and approach with FIG. 13).

If NO, computer 200 takes topic-descriptor 199 to be query 391 and continues with step 430 (executing query), and instructs selector 291 (cf. FIGS. 4 and 11) to route query 391 to a standard set (e.g., to separation 300d1 being a default separation). This can correspond to a first query mode (e.g., d1 in FIG. 11).

If YES (there is a topic-to-intention mismatch), computer 200 selects an alternative set (cf. FIGS. 4, 11 item 300d2, here shown as step 427 to select the "alternative set" such as set 300d2). If YES, computer 200 can also determine the intention (step 428). If the intention is known (i.e. from step 428), and if separations (or sets) are available for specific intentions (cf. FIG. 11), the intention can have the function of the query mode (cf. item 350 in FIG. 11). In that case, the selection (of the sets, cf. FIG. 11) would correspond to the intention (cf. step 429).

In the example with the statement "Let's go to 'The planets' on Wednesday but I have to make a reservation", computer 200 identifies "Let's go to ... on Wednesday but I have to make a reservation" as a pointer to an every-day life activity (e.g., as descriptor 198, here in the function of operation mode d2. There is an intention to meet in person, so that the separation 300d1 vs 300d2 can be selected accordingly.

Or, the computer would find a mismatch between PLANET and previous questions or comments by Anna regarding food (here in the function of the further descriptors). Simplified, Anna may post food-related comments almost daily around noon, cf. the d2 cluster in FIG. 11. This is another example for preventing ambiguity: if an interaction (query and context) fits to a particular query mode (e.g., d1, d2), the query can be directed to the separation (cf. FIG. 11) that more likely results in a response (within relatively short time).

### Technical implementation for the intention-to-match test

FIG. 13 illustrates topic-descriptor 199 and further descriptors 198 by way of example. Both descriptors 199 and 198 can belong to a search statement that a user enters to a computer, for example, the statement that Anna enters to her computer: "Let's go to The Planet on Wednesday but I have to make a reservation".

The computer can separate the statement into descriptor 199 and further descriptors 198, for example, by looking words up in database 300 (e.g., "PLANET" would be record, "Wednesday" not").

The computer can relate descriptors 199 and 198 to groups, such as a first group with PLANET, SATURN, MOON, etc. and a second group with Monday, Tuesday, ..., reservation, etc.

The computer determines a so-called distance between descriptors 199 and 198 in the statement (or between the topic and the further data). The distance can be a numerical value. For example, the value can be a distance (term1, term2) between two terms. The skilled person can use pre-trained language models to identify relationships between terms, based on likelihoods or set-memberships. During training, a language models may read, for example, texts that mention the days of the week and also terms such as "time", "appointment" and so on. Consequently, the trained language model may calculate the semantic distances between these terms to be relatively small (e.g., small distances (Monday, week).

Set-membership can be learned as well as a distance value as well. In an illustrative example, the term "king" stands for a member in the set "man", the term "queen" stands for a member in the set "woman". Semantic distances can be determined, even with directional distances (e.g., man-to-king distance and king-to-man distance indicating opposite directions).

For example, the distance (PLANET, Wednesday) can be a relatively large distance (compared to a threshold that could be obtained my machine learning as well). Although the names of the planets may sometimes be the names for weekdays, there is a semantic difference. The computer would also calculate the distances to other parts of the question ("reservation").

Distance (PLANET, SPACE), Distances (PLANET, ASTRONOMY) - with SPACE or ASTRONOMY being recognized by the computer as an activity area for Anna - can be relatively small distance values. An intention-to-topic mismatch would be less likely (cf. FIG. 12).

There could be term collections. For example, PLANET can be identified in a collection of astronomical terms, the phrases "Wednesday", "reservation" and so on in a collection of time-related words. There would be a relatively large distance between both collections.

Intention-to-topic mismatch can be defined as a function of the distance. For example, higher distance (potentially above a threshold) can be indicative of a mismatch.

The consequence of detecting the mismatch is shifting the query (in an alternative query mode) to a separation (cf. 300d1, 300d2) that is more appropriate (in terms of computation load etc., as described). But there is also a reduction of risk: the query can still be answered by intermediate computer (and not necessarily by external computer services).

### Generic computer

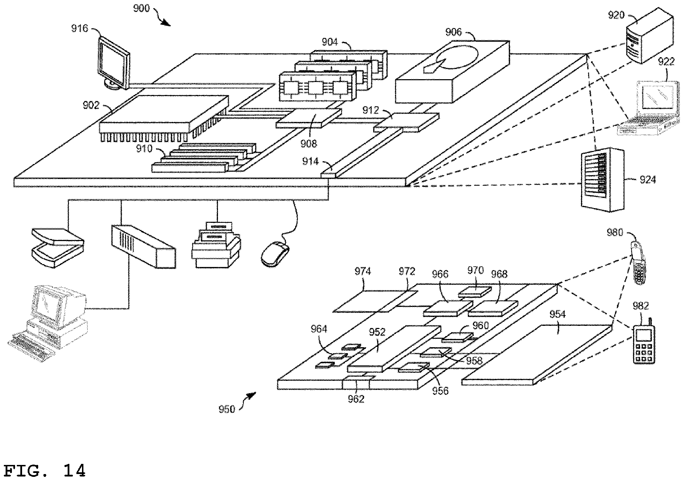

FIG. 14 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device 900 may correspond to computers 200, 201, 202 etc. Computing device 950 is intended to represent various forms of mobile devices, such as personal digital assistants, cellular telephones, smart phones, and other similar computing devices. For example, computing device 950 may be used as a frontend (e.g., display function) for interaction. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid-state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or another similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically operate through a communication network. The relationship of client and server arises by virtue of computer programs running on the respective computers and having a client-server relationship to each other.

### Further Summary

A computer-implemented method is provided to establish a computer-implemented communication link between a first computer and a second computer. The method is executed by an intermediate computer. The intermediate computer obtains - from the first computer - a first person-identifier that represents a first person and a first topic-descriptor that is related to the first person. The intermediate computer executes a query to a set of records. The records represent associations from particular topics to particular persons by comprising assignments from topic-descriptors to person-identifiers. The query uses the first topic-descriptor (as a clause in the query), and a result (of executing the query) comprises one or more person-identifiers, provided that - according to pre-defined matching rules - the first topic-descriptor matches a second topic-descriptor in at least one matching record of the set. The person-identifier in the at least one matching record represents at least a further person. Prior to obtaining the identifier and the descriptor from the first computer, the intermediate computer performs ranking the records in the set, so that when it executes the query, the intermediate computer processes higher-ranked records with priority over lower-ranked records. The intermediate computer performs establishing the communication link between the first computer and the second computer, provided that ability data indicate the ability of computer-assisted communication between the first person and the second person

(i.e., communication ability). The second computer is the computer that interacts with the further person. In step ranking, the computer can separate the set into at least a higher-ranked sub-set and a lower-ranked sub-set, and in step executing the query, the intermediate computer initially accesses the records of the higher-ranked sub-set. The intermediate computer can repeat the step executing the query by accessing the lower-ranked sub-set if the initially performed query does not lead to the result. In step executing the query, the intermediate computer can provide the result with an indication to control the performance of the subsequent method step of establishing the communication link. In other words, the result can be provided with an indication on how the subsequent method step of establishing the communication link is to be performed. In step executing the query, the intermediate computer can provide the result with an indication to control such that two or more person-identifiers of the result are given in a sequence. The intermediate computer can perform the step ranking by flagging the records with flags that represent the ranks.

The intermediate computer can determine an ability of computer-assisted communication by conducting an ability check for the further person to communicate with the first person via a computer.

The intermediate computer can conduct the ability check by interrogating a further computer user that acts for the further person and - in the presence of the response within a pre-defined time-interval - the intermediate computer can establish the communication link with the further computer user (i.e., who becomes the computer user of the second computer).

The intermediate computer can determine the ability of computer-assisted communication, by ranking records that are associated to non-able persons to the lowest rank and ignoring the lowest rank in executing the query. The intermediate computer can perform ranking the records in the set according to at least primary criteria, by processing probability values derived from ability data, obtained from data sources outside the set.

The intermediate computer can perform ranking the records in the set according to secondary criteria, by processing probability values, derived from any of the following: the temporal distance from creating a document to the time of ranking, the number of confirmations to records in the set, data regarding the type and number of documents for that a particular person is an author, data regarding the time when a particular person had become familiar with a particular topic, data regarding credentials for particular topics.

When the intermediate computer performs the step obtaining, it obtains the first person-identifier from the log-in credentials of the first computer user. The first computer user is the user of the first computer and is identical with the first person.

The intermediate computer that executes the method can also be considered as a database management system. The computer stores and retrieves data using various data structures for efficient management of data. Ranking improves system throughput and query response times because running a query to a ranked record set optimizes the execution of the query. Ranking creates a data structure that facilitates more efficient execution of the query.

A number of embodiments have been described. Nevertheless, it will be understood that various modifications may be made without departing from the spirit and scope of the invention. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. Computer-implemented method (400) to establish a computer-implemented communication link (305) between a first computer (201) and a second computer (202), the method (400) executed by an intermediate computer (200), comprising:
obtaining (420) - from the first computer (201) - a first person-identifier (Anna) that represents a first person (101) and a first topic-descriptor (199, PLANET) that is related to the first person (101),
executing (430) a query (391) to a set (300) of records (302, 303), wherein the records represent associations from particular topics to particular persons by comprising assignments from topic-descriptors to person-identifiers (PLANET-to-Anna, PLANET-to-Bob, ... , SUN-to-Carmen), wherein the query (391) uses the first topic-descriptor (199, PLANET), and wherein a result (392) of query execution comprises one or more person-identifiers (Bob, Jana), provided that - according to pre-defined matching rules - the first topic-descriptor (199, PLANET) matches a second topic-descriptor (PLANET) in at least one matching record (302, 303) of the set (300), so that the person-identifier (Bob, Jana) in the at least one matching record (303, 302) represents at least a further person (102),
the method (400) **characterized in that**
(i) prior to obtaining (420) the first person-identifier and the first topic-descriptor (199) from the first computer (201), the intermediate computer (200) performs ranking (410) the records (302, 303) in the set (300), so that in the step executing (430) the query (391), the intermediate computer (200) processes higher-ranked records (311) with priority over lower-ranked records (312);
(ii) after obtaining (420) the first person-identifier (Anna) and the first topic-descriptor (199, PLANET) from the first computer (201), the intermediate computer (200) performs selecting (422) a particular set (300d1, 300d2) of records from a plurality of sets (300a, 300b, 300c) by a selector (291), so that the step executing (430) the query (391) is performed with the particular selected set; and
(iii) the intermediate computer (200) performs establishing (450) the communication link (305) between the first computer (201) and the second computer (202), provided that ability data (500) indicate the ability of computer-assisted communication between the first person (101) and the second person (102).

2. Method according to claim 1, wherein the intermediate computer (200) performs selecting (422) the particular set (300d1, 300d2) according to a query mode (350) that is determined by processing the query (390) and context data (360) according to one or more rules.

3. Method according to claim 2, wherein - to determine the query mode (350) - the intermediate computer (200) applies one or more rules that are pre-defined rules.

4. Method according to claim 2, wherein - to determine the query mode (350) - the intermediate computer (200) applies the one or more rules that are obtained from a machine-learning tool.

5. Method according to claim 1, wherein the intermediate computer (200) performs selecting (422) the particular set (300d1, 300d2) by a query mode identifier (292) that communicates a query mode (350) to a selector (391), wherein the query mode identifier (292) is implemented as a pre-trained machine-learning tool that has been trained by processing historical event data that comprises one or more of the following:
event data with topic-descriptors and person-identifiers from the past;
event data with queries and results from the past; event data with links that had been established in the past; and event data that describe follow up activities after communication links (305) had been established in the past.

6. Method according to claim 5, wherein
(i) wherein during training the query mode identifier (292), the intermediate computer (200) clusters the event data into at least two clusters, and
(ii) the intermediate computer (200) determines the query mode (350) by matching the query (390) to one of the clusters.

7. Method according to any of claims 1 to 6, wherein obtaining (420) the first person-identifier (Anna) and the first topic-descriptor (199) from the first computer (201) further comprises to obtain a further descriptor (198), and wherein selecting (422) the set from the plurality of sets comprises to process the first topic-descriptor (199) and the further descriptor (198) to identify (426) an intention-to-topic mismatch, and wherein the intermediate computer (200) selects the particular set (300d1, 300d2) according to presence or absence of the intention-to-topic mismatch.

8. Method according to claim 7, wherein for the presence of an intention-to-topic mismatch, the intermediate computer (200) determines the intention by processing the first topic-descriptor (199), the further descriptor (198) and context data (360).

9. Method according to claim 7, wherein the further descriptor (198) is obtained, selected from the following:
separating a text string into the first topic-descriptor (199) and the further descriptor (198);
parsing through data that the first person has entered into the first computer (201) during a pre-defined time-interval in the past; and
parsing through the data that are based on historical user interaction of the first person.

10. Method according to any of claims 7 to 9, wherein the intermediate computer (200) identifies presence or absence of the intention-to-topic mismatch by comparing the semantic distance between the first topic-descriptor (199) and the further descriptor (198) to a threshold value.

11. Method (400) according to claim 1, wherein in step ranking (410), the intermediate computer (200) separates the set (300) into at least two separations, wherein the separations (300d1, 300d2) each have at least a higher-ranked sub-set (311) and a lower-ranked sub-set (312); and wherein in step executing (430) the query (391), the intermediate computer (200) initially accesses the records of the higher-ranked sub-set (311) of the separation that corresponds to the operation mode (350).

12. Method (400) according to any of claims 1 to 11, wherein the intermediate computer (200) repeats the step executing (430) the query (391) by accessing the lower-ranked sub-set (312) if the initially performed query (391) does not lead to the result (392).

13. Computer system that is adapted to perform the computer-implemented method according to any of claims 1 to 12, wherein the computer system (200) performs the method in the function of the intermediate computer (200).

14. Computer program product that - when loaded into a memory of a computer and being executed by at least one processor of the computer causes the computer to perform the steps of the method according to any of claims 1 to 12.
